(19)

Europäisches Patentamt

European Patent Office

Office européen des brevets

(11) **EP 4 438 214 A1**

(12) **EUROPEAN PATENT APPLICATION**
published in accordance with Art. 153(4) EPC

(43) Date of publication:
**02.10.2024 Bulletin 2024/40**

(21) Application number: **22921253.5**

(22) Date of filing: **18.02.2022**

(51) International Patent Classification (IPC):
**B23K 9/127** (2006.01)

(52) Cooperative Patent Classification (CPC):
**B23K 9/127; B23K 37/00; B23K 37/02**

(86) International application number:
**PCT/CN2022/076911**

(87) International publication number:
**WO 2023/137817 (27.07.2023 Gazette 2023/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.01.2022 CN 202210064183**

(71) Applicants:
• **China Nuclear Power Engineering Co., Ltd.**
  **Shenzhen, Guangdong 518124 (CN)**
• **Shanghai Rocksensor Automation Co., Ltd.**
  **Shanghai 201109 (CN)**

(72) Inventors:
• **ZHONG, Wenbin**
  **Shenzhen, Guangdong 518124 (CN)**

• **LI, Xiaotao**
  **Shenzhen, Guangdong 518124 (CN)**
• **LIU, Qiao**
  **Shenzhen, Guangdong 518124 (CN)**
• **LI, Yuwei**
  **Shenzhen, Guangdong 518124 (CN)**
• **XUE, Lintao**
  **Shenzhen, Guangdong 518124 (CN)**
• **SONG, Tiantao**
  **Shenzhen, Guangdong 518124 (CN)**
• **WANG, Xujian**
  **Shanghai 201109 (CN)**

(74) Representative: **LEITZINGER OY**
**c/o Spaces**
**Mannerheiminaukio 1A**
**00100 Helsinki (FI)**

(54) **WELDING SYSTEMS AND WELDING CONTROL METHODS**

(57) The invention belongs to the technical field of welding, and particularly discloses a welding system and a welding control method, which are used for welding a first pipe fitting to a structural member and a groove is formed in the structural member. The welding system comprises a welding robot, a measuring device and a control device, and the measuring device is used for measuring first position information of the first pipe fitting and a first outline of the groove after the first pipe fitting and the structural member are pre-positioned; and the control device is configured to be capable of establishing a groove model according to the first position information and the first outline, calculating actual coaxiality data of the first pipe fitting, and determining a first welding process through analysis on the groove model and the actual coaxiality data in combination with target coaxiality data; and is configured to be capable of determining the first welding process through analysis on the groove model and the target coaxiality data, so that the welding robot completes efficient automatic welding of the first pipe fitting and the structural member, the deformation of the welded pipe fitting is reduced, and the welding precision is improved.

FIG. 2

**Description**

**TECHNICAL FIELD**

The present invention relates to the technical field of welding, and particularly to a welding system and a welding control method.

**BACKGROUND**

During welding of a pipe fitting and a structural member, welding defects such as longitudinal shortening, transverse shortening, angular deformation and bending deformation are easily caused due to different welded joint types, weld assembly shapes, welding seam positions, pipe fitting thicknesses, assembly and welding sequences, and welding methods. Especially in nuclear power plants, pipe fittings, the welding in oil delivery pipelines and natural gas delivery pipelines is performed relatively frequently, and in some specific use scenarios, the welding of pipe fittings of high-precision equipment has strict precision control requirements on the deformation or position of the pipe fittings after welding.

However, traditional anti-deformation control methods for pipe fitting welding are mainly as follows: 1. a special anti-deformation fixing clamp is produced, before welding the pipe fitting, two ends of the pipe fitting are clamped by the anti-deformation fixing clamp, the welding deformation of the pipe fitting during welding is observed manually, and a deformation direction is corrected through reverse knocking by an auxiliary wooden hammer and other tools, this control method has low efficiency, poor anti-deformation control effect, and incapability of controlling micro-deformation; 2. the deformation of the pipe fitting is calculated manually according to measured data, and an adjustment scheme is made according to the deformation, this control method has low efficiency and a limited adjustable range; and 3. the welding of pipe fittings, oil delivery pipelines and natural gas delivery pipelines in nuclear power plants is mostly performed manually based on experience, thus having low welding efficiency and uneven deformation control.

**SUMMARY**

The present invention aims to solve at least one of the technical problems in the prior art. Therefore, the present invention provides a welding system, which can realize efficient automatic welding of a pipe fitting and a structural member, and a deformation or a position degree of the pipe fitting after welding can meet requirements of precision control.

The present invention further provides a welding control method using the above welding system.

A welding system according to an embodiment in a first aspect of the present invention is used for welding a first pipe fitting to a structural member, and a groove is formed in the structural member, wherein the welding system comprises:

a welding robot,

a measuring device for measuring first position information of the first pipe fitting and a first outline of the groove after the first pipe fitting and the structural member are pre-positioned; and

a control device configured to be capable of establishing a groove model according to the first position information and the first outline, calculating actual coaxiality data of the first pipe fitting, and determining a first welding process through analysis on the groove model and the actual coaxiality data in combination with target coaxiality data.

The welding system according to the embodiment of the present invention has at least the following beneficial effects. Through the first position information and the first outline of the groove acquired by the measuring device, the control device can obtain the coaxiality of the first pipe fitting, establish the groove model, and determine the first welding process by analyzing the groove model and the target coaxiality, so that the welding robot completes efficient automatic welding of the first pipe fitting and the structural member and the deformation of the first pipe fitting can be reduced after welding, thus improving the welding precision.

According to some embodiments of the present invention, the structural member is a second pipe fitting, an end portion of the first pipe fitting is inserted into an end portion of the second pipe fitting, the groove is formed at the end portion of the second pipe fitting, and the groove model is formed by projecting the first outline on a projection plane perpendicular to an axial direction of the first pipe fitting.

According to some embodiments of the present invention, the groove model is formed by projecting the first outline on a projection plane perpendicular to an axial direction of the first pipe fitting, and a projection angle between the first outline and the projection plane is an acute angle.

According to some embodiments of the present invention, the first welding process comprises a first welding starting point and first welding parameters.

According to some embodiments of the present invention, the first welding process is determined by a teaching system and an expert database, wherein the first welding starting point is set as any point on the first outline.

According to some embodiments of the present invention, the measuring device is configured to track and measure second position information of the first pipe fitting and a second outline of the groove in real time during welding, and establish a welding seam model.

According to some embodiments of the present invention, for multi-pass welding, the control device is configured to be capable of automatically adjusting and resetting a second welding process after N welding seams are completed, the second welding process comprises a second welding starting point and second welding parameters, and N is a natural number.

According to some embodiments of the present invention, the measuring device is configured to record tracks of the N welding seams after the N welding seams are completed, the first pipe fitting is offset relative to the target coaxiality, welding seams corresponding to the target coaxiality of the first pipe fitting are set as N theoretical welding seams, the N welding seams are offset relative to the N theoretical welding seams, a positive offset is defined by deviation of N welding seams from centers of the N theoretical welding seams and a negative offset is defined by deviation of the N welding seams towards the centers of the N theoretical welding seams, a point of the N welding seams with a maximum positive offset relative to the N theoretical welding seams is a point A and a point with a maximum negative offset is a point B, wherein the second welding starting point is offset from the point A by 4° to 8° in a direction opposite to a welding direction, an offset between current welding seams and the N theoretical welding seams is calculated in real time during welding, an allowable maximum offset is set as D0, when the positive offset is greater than D0, a welding heat input amount is reduced, so as to reduce an amount of deposited metal, and when the negative offset is greater than D0, the welding heat input amount is increased, so as to increase the amount of deposited metal.

According to some embodiments of the present invention, the first pipe fitting is a circular pipe, and a surface of the structural member on which the groove is formed is an arc surface.

According to some embodiments of the present invention, the annular mounting plate comprises a first mounting plate and a second mounting plate which are movably connected, so that a dimension of the avoidance space is adjustable.

According to some embodiments of the present invention, the mounting seat is a magnetic mounting seat.

According to some embodiments of the present invention, the first mounting plate and the second mounting plate are rotatable in a first direction, so as to open or close the avoidance space.

According to some embodiments of the present invention, the first mounting plate and/or the second mounting plate comprises a rotating plate rotatable in a second direction, the second direction is perpendicular to the first direction, and the sensor bracket is mounted on the rotating plate.

According to some embodiments of the present invention, the first mounting plate and the second mounting plate are both L-shaped, the first mounting plate comprises a first rotating plate and a second rotating plate, the second mounting plate comprises a third rotating plate and a fourth rotating plate, and the first rotating plate, the second rotating plate, the third rotating plate and the fourth rotating plate are all provided with the sensor bracket.

According to some embodiments of the present invention, the sensor bracket is capable of rotating relative to the sensor bracket.

A welding control method used in a welding system according to an embodiment in a second aspect of the present invention is used for welding a first pipe fitting to a structural member, and a groove is formed in the structural member, wherein the welding system comprises a welding robot, a measuring device and a control device, and the welding control method comprises the following steps of:

measuring first position information of the first pipe fitting and a first outline of the groove after the first pipe fitting and the structural member are pre-positioned;

acquiring target coaxiality data of the first pipe fitting;

establishing a groove model, and calculating actual coaxiality data of the first pipe fitting; and

determining a first welding process through analysis on the groove model and the actual coaxiality data in combination with the target coaxiality data.

The welding control method according to the embodiment of the present invention has at least the following beneficial effects. Through the first position information and the first outline of the groove acquired, the coaxiality of the first pipe fitting is obtained to establish the groove model, and the first welding process is determined through analysis, so that the welding robot completes efficient automatic welding of the first pipe fitting and the structural member and reduce a deformation of the first pipe fitting after welding, thus improving a welding precision.

According to some embodiments of the present invention, the structural member is a second pipe fitting, an end portion of the first pipe fitting is inserted into an end portion of the second pipe fitting, the groove is formed at the end portion of the second pipe fitting, and the groove model is formed by projecting the first outline on a projection plane perpendicular to an axial direction of the first pipe fitting.

According to some embodiments of the present invention, the groove model is formed by projecting the first outline on a projection plane perpendicular to an axial direction of the first pipe fitting, and a projection angle between the first outline and the projection plane is an acute angle.

According to some embodiments of the present invention, the first welding process comprises a first welding starting point and first welding parameters; and the first welding process is determined by a teaching system and an expert database, wherein the first welding starting point is set as any point on the first outline.

According to some embodiments of the present invention, the welding control method further comprises: tracking and measuring second position information of the first pipe fitting and a second outline of the groove in real time during welding, and establishing a welding seam model.

According to some embodiments of the present invention, the first pipe fitting is a circular pipe, and a surface of the structural member on which the groove is formed is an arc surface.

According to some embodiments of the present invention, for multi-pass welding, the welding control method further comprises the following step of:

automatically adjusting and resetting a second welding process after N welding seams are completed, wherein the second welding process comprises a second welding starting point and second welding parameters, and N is a natural number.

According to some embodiments of the present invention, the step of automatically adjusting and resetting the second welding process after the N welding seams are completed, comprises the following steps of:

recording tracks of the N welding seams, wherein the first pipe fitting is offset relative to the target coaxiality;

setting welding seams corresponding to the target coaxiality of the first pipe fitting as N theoretical welding seams, wherein the N welding seams are offset relative to the N theoretical welding seams, defining a positive offset by deviation of the N welding seams away from centers of the N theoretical welding seams and defining a negative offset by deviation of the N welding seams towards the centers of the N theoretical welding seams, wherein a point of the N welding seams with a maximum positive offset relative to the N theoretical welding seams is a point A and a point with a maximum negative offset is a point B, wherein the second welding starting point is offset from the point B by 4° to 8° in a direction opposite to a welding direction, calculating an offset between current welding seams and the N theoretical welding seams in real time during welding, setting an allowable maximum offset as D0; when the positive offset is greater than D0, reducing a welding heat input amount, so as to reduce an amount of deposited metal, and when the negative offset is greater than D0, increasing the welding heat input amount, so as to increase the amount of deposited metal.

A welding system according to an embodiment in a third aspect of the present invention is used for welding a first pipe fitting to a structural member, and a groove is formed in the structural member, wherein the welding system comprises:

a welding robot;

a measuring device for measuring first position information of the groove relative to the first pipe fitting and a first outline of the groove after the pipe fitting and the structural member are pre-positioned; and

a control device configured to be capable of obtaining a groove model according to the first position information and the first outline, and determining a first welding process according to the groove model and a first preset program;

wherein, the groove model is formed by projecting the first outline on a projection plane perpendicular to an axial direction of the first pipe fitting, and a projection angle between the first outline and the projection plane is an acute angle; and the first preset program is configured to divide the groove model into a plurality of welding zones, and call corresponding welding process parameters from an expert database according to different welding zones.

The welding system according to the embodiment of the present invention has at least the following beneficial effects. Through the first position information of the groove relative to the first pipe fitting and the first outline of the groove acquired by the measuring device, the control device can obtain the groove model and determine the first welding process parameters, i.e., the groove model is divided into the plurality of welding zones and corresponding welding process parameters are called from the expert database according to different welding zones, so that the welding robot completes efficient automatic welding of the first pipe fitting and the structural member. Meanwhile, the welding deformation can be reduced, and the welding precision can be greatly improved.

According to some embodiments of the present invention, the first welding process comprises a welding heat input amount and a wire feeding speed; and comprises the steps of taking a lowest point of the first outline as a 0° point, and rotating by 360° around the first outline, wherein 0° to 90° refers to a quadrant A, and an area and a volume of the groove are gradually increased from a minimum value; 90° to 180° refers to a quadrant B, and the area and the volume of the groove are gradually increased to a maximum value; 180° to 270° refers to a quadrant C, and the area and the volume of the groove are gradually decreased from the maximum value; 270° to 360° refers to a quadrant D, and the area and the volume of the groove are gradually decreased to the minimum value; welding heat input amounts of the quadrant A, the quadrant B, the quadrant C and the quadrant D are $\lambda 1$, $\lambda 2$, $\lambda 3$ and $\lambda 4$ respectively, and wire feeding speeds of the quadrant A, the quadrant B, the quadrant C and the quadrant D are V1, V2, V3 and V4 respectively, which satisfy that: $\lambda 1<\lambda 2$, $\lambda 3>\lambda 4$, V1<V2, V3>V4; during welding from 0° to 360°, $\lambda 1$ and $\lambda 2$ are gradually increased, $\lambda 3$ and $\lambda 4$ are gradually decreased, V1 and V2 are gradually increased, and V3 and V4 are gradually decreased; and the welding heat input amount of 90° is greater than the welding heat input amount of 270°, and the wire feeding speed of 90° is greater than the wire feeding speed of 270°.

According to some embodiments of the present invention, for multi-pass welding, the measuring device is configured to be capable of acquiring second position information of a welding seam after welding relative to the first pipe fitting and a second outline of the welding seam, and the control device is configured to be capable of obtaining a welding seam model according to the second position information and the second outline, and determining a second welding process according to the welding seam model and a second preset program.

According to some embodiments of the present invention, the second welding process comprises a welding starting point, and the control device is further configured to be capable of obtaining actual coaxiality data of the first pipe fitting according to the welding seam model, and determining the welding starting point through analysis on the welding seam model and the actual coaxiality data in combination with target coaxiality data.

According to some embodiments of the present invention, the measuring device is configured to record tracks of the N welding seams after the N welding seams are completed, N is a natural number, the first pipe fitting is offset relative to the target coaxiality, welding seams corresponding to the target coaxiality of the first pipe fitting are set as N theoretical welding seams, the N welding seams are offset relative to the N theoretical welding seams, a positive offset is defined by deviation of N welding seams away from centers of the N theoretical welding seams and a negative offset is defined by deviation of the N welding seams towards the centers of the N theoretical welding seams, a point of the N welding seams with a maximum positive offset relative to the N theoretical welding seams is a point A and a point with a maximum negative offset is a point B, wherein the welding starting point is offset from the point A by 4° to 8° in a direction opposite to a welding direction.

According to some embodiments of the present invention, the second preset program is configured to divide the welding seam model into a plurality of welding zones, and call corresponding welding process parameters from an expert database according to different welding zones.

According to some embodiments of the present invention, the measuring device is a laser sensor.

According to some embodiments of the present invention, the first pipe fitting and the structural member are pre-positioned by spot welding.

A welding control method used in a welding system according to an embodiment in a fourth aspect of the present invention is used for welding a first pipe fitting to a structural member, and a groove is formed in the structural member, wherein the welding system comprises a welding robot, a measuring device and a control device, and the welding control method comprises the following steps of:

measuring first position information of the groove relative to the first pipe fitting and a first outline of the groove after the pipe fitting and the structural member are pre-positioned;

obtaining a groove model according to the first position information and the first outline, wherein the groove model is formed by projecting the first outline on a projection plane perpendicular to an axial direction of the first pipe fitting, and a projection angle between the first outline and the projection plane is an acute angle; and

determining a first welding process according to the groove model and a first preset program, wherein the first preset program is configured to divide the groove model into a plurality of welding zones, and call corresponding welding process parameters from an expert database according to different welding zones.

The welding control method according to the embodiment of the present invention has at least the following beneficial effects: the groove model is obtained and the first welding process parameters are determined by acquiring the first position information of the groove relative to the first pipe fitting and the first outline of the groove, i.e., the groove model is divided into the plurality of welding zones and corresponding welding process parameters are called from the expert database according to different welding zones, so that the welding robot completes efficient automatic welding of the first pipe fitting and the structural member. Meanwhile, the welding deformation can be reduced, and the welding precision can be greatly improved.

According to some embodiments of the present invention, the first welding process comprises a welding heat input amount and a wire feeding speed; and the step of determining the first welding process parameters according to the groove model and the first preset program comprises the following step of:

taking a lowest point of the first outline as a 0° point, and rotating by 360° around the first outline, wherein 0° to 90° refers to a quadrant A, and an area and a volume of the groove are gradually increased from a minimum value; 90° to 180° refers to a quadrant B, and the area and the volume of the groove are gradually increased to a maximum value; 180° to 270° refers to a quadrant C, and the area and the volume of the groove are gradually decreased from the maximum value; 270° to 360° refers to a quadrant D, and the area and the volume of the groove are gradually decreased to the minimum value; welding heat input amounts of the quadrant A, the quadrant B, the quadrant C and the quadrant D are $\lambda_1$, $\lambda_2$, $\lambda_3$ and $\lambda_4$ respectively, and wire feeding speeds of the quadrant A, the quadrant B, the quadrant C and the quadrant D are V1, V2, V3 and V4 respectively, which satisfy that: $\lambda_1 < \lambda_2$, $\lambda_3 > \lambda_4$, V1 < V2, V3 > V4; during welding from 0° to 360°, $\lambda_1$ and $\lambda_2$ are gradually increased, $\lambda_3$ and $\lambda_4$ are gradually decreased, V1 and V2 are gradually increased, and V3 and V4 are gradually decreased; and the welding heat input amount of 90° is greater than the welding heat input amount of 270°, and the wire feeding speed of 90° is greater than the wire feeding speed of 270°.

According to some embodiments of the present invention, for multi-pass welding, the welding control method further comprises the following steps of:

acquiring second position information of the groove after welding relative to the first pipe fitting and a second outline of the groove;

obtaining a welding seam model according to the second position information and the second outline; and

determining a second welding process according to the welding seam model and a second preset program.

According to some embodiments of the present invention, the second welding process comprises a welding starting point, and the welding control method further comprises the following step of:
obtaining actual coaxiality data of the first pipe fitting according to the welding seam model, and determining the welding starting point through analysis on the welding seam model and the actual coaxiality data in combination with target coaxiality data.

According to some embodiments of the present invention, the step of determining the welding starting point through analysis on the welding seam model and the actual coaxiality data in combination with the target coaxiality data, comprises the following steps of:

recording tracks of N welding seams, wherein the first pipe fitting is offset relative to the target coaxiality, and N is a natural number; and

setting welding seams corresponding to the target coaxiality of the first pipe fitting as N theoretical welding seams, wherein the N welding seams are offset relative to the N theoretical welding seams, defining a positive offset by deviation of the N welding seams away from centers of the N theoretical welding seams and defining a negative offset by deviation of the N welding seams towards the centers of the N theoretical welding seams, wherein a point of the N welding seams with a maximum positive offset relative to the N theoretical welding seams is a point A and a point with a maximum negative offset is a point B, wherein the second welding starting point is offset from the point B by 4° to 8° in a direction opposite to a welding direction.

According to some embodiments of the present invention, the second preset program is configured to divide the welding seam model into a plurality of welding zones, and call corresponding welding process parameters from an expert database according to different welding zones.

Additional aspects and advantages of the present invention will be given in part in the following description, which will become apparent from the following description or be understood through practice of the present invention.

BRIEF DESCRIPTION OF THE DRAWINGS

The present invention is further described hereinafter with reference to the drawings and embodiments, wherein:

FIG. 1 is a schematic diagram of a welding system according to some embodiments of the present invention;

FIG. 2 is a schematic diagram of a measuring device of the welding system according to some embodiments of the present invention;

FIG. 3 is a schematic diagram of the measuring device of the welding system according to some embodiments of the present invention;

FIG. 4 is a schematic diagram of the measuring device of the welding system according to some embodiments of the present invention;

FIG. 5 is a schematic diagram of a method for determining a second welding starting point of a welding system according to an embodiment in a first aspect of the present invention;

FIG. 6 is a process flow chart of a welding control method according to an embodiment in a second aspect of the present invention;

FIG. 7 is a process flow chart of the welding control method according to the embodiment in the second aspect of the present invention;

FIG. 8 is a process flow chart of the welding control method according to the embodiment in the second aspect of the present invention;

FIG. 9 is a process flow chart of the welding control method according to the embodiment in the second aspect of the present invention;

FIG. 10 is a schematic diagram of a zoned welding method of a welding system according to an embodiment in a third aspect of the present invention;

FIG. 11 is a schematic diagram of the zoned welding method of the welding system according to the embodiment in the third aspect of the present invention;

FIG. 12 is a process flow chart of a welding control method according to an embodiment in a fourth aspect of the present invention;

FIG. 13 is a process flow chart of the welding control method according to the embodiment in the fourth aspect of the present invention;

FIG. 14 is a process flow chart of the welding control method according to the embodiment in the fourth aspect of the present invention;

FIG. 15 is a process flow chart of the welding control method according to the embodiment in the fourth aspect of the present invention;

FIG. 16 is a process flow chart of the welding control method according to the embodiment in the fourth aspect of the present invention; and

FIG. 17 is a longitudinal cross-sectional view from a point A to a point C in FIG. 11.

Reference numerals:

1000 refers to welding system;

100 refers to welding robot;

200 refers to control device;

300 refers to first pipe fitting;

400 refers to structural member;

500 refers to measuring device, 501 refers to mounting seat, 502 refers to supporting rod, 503 refers to sensor bracket, 504 refers to avoidance space, 505 refers to adjusting seam, 506 refers to hand-tight nut, 507 refers to first mounting plate, 508 refers to second mounting plate, and 510 refers to sensor;

600 refers to power supply;

700 refers to second welding starting point;

800 refers to N theoretical welding seams; and

900 refers to N welding seams.

## DETAILED DESCRIPTION

Embodiments of the present invention are described in detail hereinafter, examples of the embodiments are shown in the drawings, and the same or similar reference numerals throughout the drawings denote the same or similar elements or elements having the same or similar functions. The embodiments described hereinafter with reference to the drawings are exemplary, are only intended to explain the present invention, and cannot be understood as limiting the present invention.

In the description of the present invention, it should be understood that the orientation or position relation related to the orientation description, such as the orientation or position relation indicated by "upper", "lower", "inner", "outer", and the like, is based on the orientation or position relation shown in the drawings, which is only used for the convenience of description of the present invention and simplification of description, rather than indicating or implying that the indicated device or element must have a specific orientation, and be constructed and operated in a specific orientation, and thus should not be understood as a limitation to the present invention.

In the description of the present invention, if there are descriptions of first and second, it is only for the purpose of distinguishing between technical features, and shall not be understood as indicating or implying relative importance or implying the number of indicated technical features or implying the order of indicated technical features.

In the description of the present invention, unless otherwise explicitly defined, the terms "setting", "mounting" and "connecting" should be understood in a broad sense, and those of ordinary skills in the art can reasonably determine the specific meanings of the above terms in the present invention in combination with the specific contents of the technical solution.

The embodiments of the present invention have been described in detail with reference to the drawings, and it should be finally noted that: the above embodiments are only used to illustrate the technical solution of the present invention, rather than limiting the present invention; although the present invention has been described in detail with reference to the foregoing embodiments, those of ordinary skills in the art should understand that: the technical solution recorded in the foregoing embodiments can still be modified, or some or all of the technical features therein can be equivalently replaced, these modifications or replacements do not make the essence of the corresponding technical solution deviate from the scope of the technical solution of the embodiments of the present invention.

During welding of a stainless steel pipe fitting and a structural member, welding defects such as longitudinal shortening, transverse shortening, angular deformation and bending deformation are easily caused due to different welded joint types, weld assembly shapes, welding seam positions, pipe fitting thicknesses, assembly and welding sequences, and welding methods. Especially in nuclear power plants, the welding of pipe fittings, oil delivery pipelines and natural gas delivery pipelines is performed relatively frequently, and in some specific use scenarios, the welding of pipe fittings of high-precision equipment has strict precision control requirements on the deformation or position of the pipe fittings after welding.

Traditional anti-deformation control methods for connecting pipe welding are mainly as follows: 1. a special anti-deformation fixing clamp is produced, before welding the connecting pipe, two ends of the connecting pipe are clamped by the anti-deformation fixing clamp, the welding deformation of the connecting pipe during welding is observed manually, and a deformation direction is corrected through reverse knocking by an auxiliary wooden hammer and other tools, thus having extremely low efficiency, poor anti-deformation control effect, and incapability of controlling micro-deformation; 2. a position of the connecting pipe is tracked regularly during welding by using a digital micrometer, the deformation of the connecting pipe is manually calculated according to measured position data, an adjustment scheme is made according to the deformation, with extremely low efficiency, and an adjustment direction thereof is only limited to adjusting a welding starting point, an adjustable range is limited, and the digital micrometer has low measurement precision; and 3. the welding of connecting pipes (especially connecting pipes of equipment in nuclear islands), oil delivery pipelines and natural gas delivery pipelines in nuclear power plants is mostly performed manually, with low welding efficiency, and during automatic welding of the connecting pipe, in order to monitor and control the deformation of the connecting pipe during welding in real time, it is necessary to develop an automatic welding control system for the connecting pipe to automatically control a welding track of a welder, automatically adjust a welding position starting point, a welding direction and welding parameters of a welding procedure according to set conditions, and output them to the automatic welder, so as to ensure that the deformation of the connecting pipe is within a target value.

A welding system 1000 according to an embodiment in a first aspect of the present invention is used for welding a first pipe fitting 300 to a structural member 400, and a groove is formed in the structural member 400. The welding system 1000 comprises a welding robot 100, a measuring device 500, a control device 200 and a welding power supply 600. The measuring device 500 is used for measuring first position information of the first pipe fitting 300 and a first outline of the groove after the first pipe fitting 300 and the structural member 400 are pre-positioned; and the control device 200 is configured to be capable of establishing a groove model according to the first position information and the first outline, calculating actual coaxiality data of the first pipe fitting 300, and determining a first welding process through analysis on the groove model and the actual coaxiality data in combination with target coaxiality data.

It should be noted that the structural member 400 may be a pipe fitting, a plate or other irregular structures. The groove has various forms, such as an I-shape (without an opening), a V-shape, a Y-shape, a double Y-shape, a U-shape, a double U-shape, a single-sided V-shape, a double-sided Y-shape or a J-shape. Welding types of the welding robot 100 may be gas welding, electric-arc welding, electro-slag welding, plasma-arc welding, electron-beam welding, laser welding, and the like, and a welding wire may be added during welding.

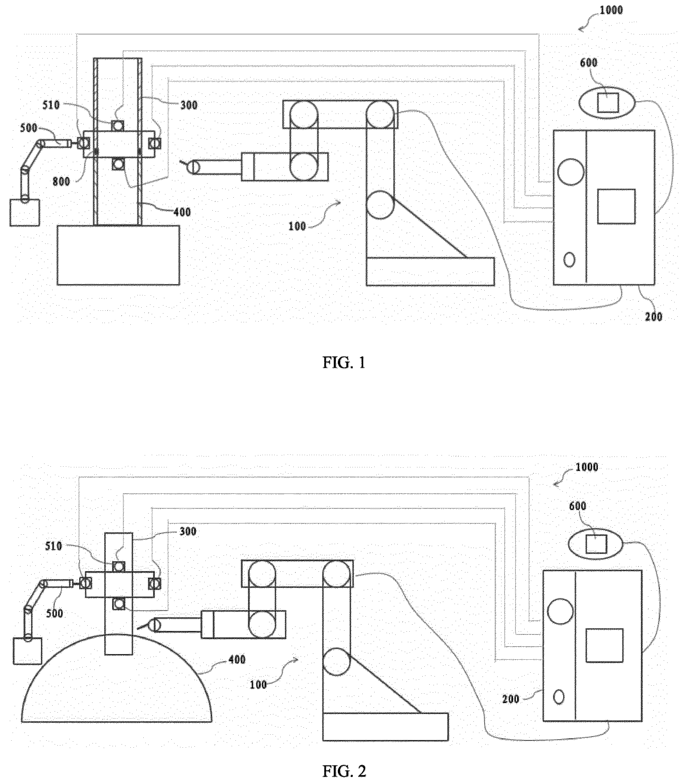

In some embodiments, with reference to FIG. 1, the structural member 400 is a second pipe fitting, an end portion of the first pipe fitting 300 is inserted into an end portion of the second pipe fitting, the groove is formed at the end portion of the second pipe fitting, and the groove model is formed by projecting the first outline on a projection plane perpendicular to an axial direction of the first pipe fitting 300. In this case, the first pipe fitting 300 and the second pipe fitting are welded in a butted manner.

In some embodiments, the groove model is formed by projecting the first outline on a projection plane perpendicular to an axial direction of the first pipe fitting 300, and a projection angle between the first outline and the projection plane is an acute angle. In this case, the first pipe fitting 300 is welded to an inclined surface structural member 400 or an arc surface structural member 400 (which is namely a situation shown in FIG. 2).

The welding system 1000 according to the embodiment of the present invention has at least the following beneficial effects. Through the first position information and the first outline of the groove acquired by the measuring device 500, the control device 200 can obtain the coaxiality of the first pipe fitting 300, establish the groove model, and determine the first welding process by analyzing the groove model and the target coaxiality, so that the welding robot 100 completes efficient automatic welding of the first pipe fitting 300 and the structural member 400 and the deformation of the first pipe fitting 300 can be reduced after welding, thus improving the welding precision.

It can be understood that the measuring device 500 may be a laser sensor 510, an infrared sensor 510, a CCD (charge coupled device) camera, and the like.

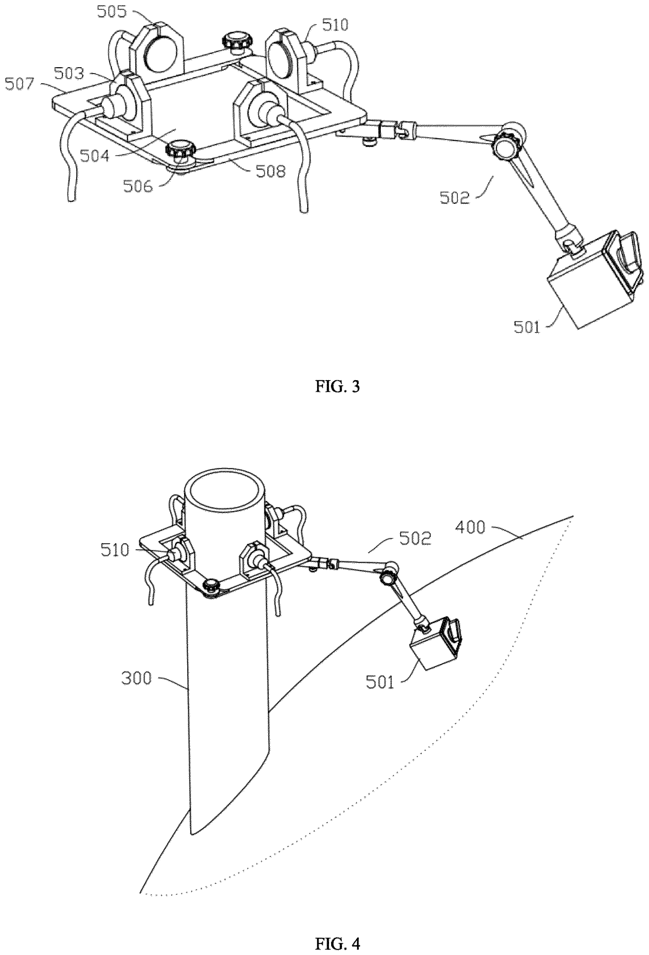

In some embodiments, with reference to FIG. 3 and FIG. 4, the measuring device 500 comprises an adjustable bracket, and the adjustable bracket comprises a mounting seat 501, a supporting rod 502, an annular mounting plate and a sensor bracket 503, wherein the mounting seat 501 is used for fixing the measuring device 500; the supporting rod 502 has one end movably connected to the mounting seat 501; the annular mounting plate is movably mounted at the other end of the supporting rod 502, an avoidance space 504 is formed inside the annular mounting plate, and the avoidance space 504 can be used for passing through the first pipe fitting 300; and the sensor bracket 503 is detachably mounted on the annular mounting plate.

In some embodiments, the annular mounting plate comprises a first mounting plate 507 and a second mounting plate 508 which are movably connected, so that a dimension of the avoidance space 504 is adjustable, thus being capable of being suitable for the first pipe fittings 300 with different diameters.

It can be understood that, in order to facilitate mounting the laser sensor 510 on the sensor bracket 503, the sensor bracket 503 is provided in an annular shape, and the annular-shaped sensor bracket 503 is provided with an adjusting seam 505, so that a diameter of the sensor bracket 503 can be adjusted in a certain range.

It can be understood that the mounting seat 501 is a magnetic mounting seat 501, and the magnetic mounting seat 501 is convenient to operate, so that the measuring device 500 can be flexibly fixed at a suitable position.

In some embodiments, the first mounting plate 507 and the second mounting plate 508 are rotatable in a first direction, so as to open or close the avoidance space 504. It can be understood that the first direction is a clockwise direction or a counterclockwise direction.

According to some embodiments of the present invention, the first mounting plate 507 and/or the second mounting plate 508 comprises a rotating plate rotatable in a second direction, the second direction is perpendicular to the first direction, and the sensor bracket 503 is mounted on the rotating plate.

According to some embodiments of the present invention, with reference to FIG. 3 and FIG. 4, the first mounting plate 507 and the second mounting plate 508 are both L-shaped, end portions of the L-shaped first mounting plate 507 and the L-shaped second mounting plate 508 are all provided with a mounting hole, so that the mounting plates can be connected and fixed by a hand-tight nut 506. It should be noted that FIG. 4 only shows one mounting state of the adjustable bracket. In actual use, the adjustable bracket needs to be specifically adjusted according to the shape of a structure to be welded and a position of the groove, so as to meet actual measurement requirements of a laser displacement sensor 510.

It should be noted that, in some embodiments, not shown in the figure, the first mounting plate 507 comprises a first rotating plate and a second rotating plate, the second mounting plate 508 comprises a third rotating plate and a fourth rotating plate, and the first rotating plate, the second rotating plate, the third rotating plate and the fourth rotating plate are all provided with the sensor bracket 503, so that the sensor bracket 503 can rotate, thus adjusting an angle of the laser displacement sensor 510, and the laser displacement sensor 510 can be aligned with the groove or the welding seam to scan, such as rotating the laser displacement sensor 510 by 45°.

It can be understood that, in some embodiments, not shown in the figure, in order to realize angle adjustment of the laser displacement sensor 510, the sensor bracket 503 may also be rotatably arranged on the annular mounting plate directly, for example, a bottom portion of the sensor bracket 503 is connected to the annular mounting plate through a spherical universal structure, so that the sensor bracket 503 can be adjusted at any angle to meet mounting angle requirements of the laser displacement sensor 510.

According to the above description, it can be understood that the laser displacement sensor 510 and the control device 200 are sequentially connected with the welding robot 100 through a data transmission line, and the communication port is a standard port. The laser displacement sensor 510 records position information of the first pipe fitting 300 relative to the structural member 400 in real time and tracks position offset of the connecting pipe. During welding, the laser displacement sensor 510 may measure a 2D surface outline of a welding seam of the connecting pipe in real time by 360° from four surfaces of the first pipe fitting 300 and output 2D surface outline data information, and measure a 3D surface outline of the connecting pipe and output 3D surface outline data information. A magnetic gauge stand is provided with an ON/OFF switch, which is not limited by site environment and may be freely fixed on a steel product platform, thus being easy to operate. The magnetic gauge stand has a safe locking and fixing mechanism, thus being uneasy to loosen and fall off, and an adjustment angle is about $\pm 20°$. The supporting rod 502 may specifically comprises a lower gauge rod and an upper gauge rod which are movably connected, and the two rods are connected by the hand-tight nut 506. The adjustment mode of fixed knob is simple and convenient to operate, and can realize large-scale adjustment of a relative angle between the upper gauge rod and the lower gauge rod according to actual situations.

The first mounting plate 507 and the second mounting plate 508 are connected by the hand-tight nut 506, when the adjustable bracket moves to a preset position of the first pipe fitting 300, the hand-tight nut 506 is unscrewed, and after the first mounting plate 507 and the second mounting plate 508 are rotated to a preset position of the connecting pipe, the first mounting plate 507 and the second mounting plate 508 are opened to encircle the first pipe fitting 300, and then the first mounting plate 507 and the second mounting plate 508 are fixed. Four sensor brackets 503 are symmetrically mounted on the first mounting plate 507 and the second mounting plate 508.

The above adjustable bracket may adjust the position of the laser displacement sensor 510 in six freedom degrees, which is not limited by site environment, and the adjustable bracket may be freely fixed on the steel product platform and may adjust the laser displacement sensor 510 to be at the preset position of the connecting pipe along an up-down direction of the first pipe fitting 300. In a transverse direction, a size of the annular mounting plate may be adjusted according to the diameter of the connecting pipe, and a transverse distribution position of the laser displacement sensor 510 is adjusted. In a circumferential direction, an up-down angle of the laser displacement sensor 510 may be adjusted by rotation according to actual requirements.

In some embodiments, after the first pipe fitting 300 and the second pipe fitting are assembled according to the designed groove, fixation is performed by spot welding. The measuring device 500 is placed at an appropriate position. The laser sensor 510, the control device 200, a PC terminal and the welding robot 100 are connected.

When the control device 200 is started, the laser sensor 510 measures a 3D surface outline of a 2D surface outline of the groove by 360° from four surfaces, and records relative positions of the first pipe fitting 300 and the second pipe fitting, so as to determine coaxiality condition of the first pipe fitting 300 and the second pipe fitting.

It can be understood that, when multi-pass welding is performed, the laser sensor 510 measures a 3D surface outline of a 2D surface outline of the welding seam by 360° from four surfaces. It is known according to those of ordinary skills in the art that the groove or a track of the welding seam may be calculated by using a B-spline interpolation or least square method, and a track of a curved surface is calculated by these algorithms.

B-spline is a generalization of a Bezier curve, and may be further extended to a non-uniform rational B-spline, so that accurate models can be established for more general geometries. B-spline curve and curved surface have many excellent properties, such as geometric invariability, convex-hull property, convexity-preserving property, variation diminishing property and local supporting property, and are commonly-used geometric representation methods in a CAD system. Definition: given that n+1 control points Pi (i=0,1,2,...,n) are provided, an expression of a $k^{th}$-power B-spline curve may be defined as P(u)=∑(n,i=0)PiNi,k(u).

The least square method is a mathematical optimization technology. In the least square method, optimum function matching of data is sought for by minimizing a sum of squares of errors. Unknown data may be easily obtained by the least square method, and a sum of squares of errors between these obtained data and actual data is minimized.

Meanwhile, the control device 200 can calculate the coaxiality of the first pipe fitting 300 according to the 3D surface outline, and output a coordinate zero point and coaxiality data to the PC terminal. Meanwhile, the PC terminal inputs and controls a coaxiality target value of the first pipe fitting 300.

It can be understood that the coaxiality is a location tolerance, and a theoretical correct position is a reference axis. Since points of a measured axis different from the reference axis may appear in all directions in space, a tolerance zone is a cylinder with the reference axis as an axis, and a tolerance value is a diameter of the cylinder, wherein a symbol "φ" is always added before the tolerance value. In the national standard, the definition of the tolerance zone of the coaxiality refers to a region within a cylindrical surface which has a diameter tolerance of t and is coaxial with the reference axis. There are the following three control elements: 1. axis and axis; 2. axis and common axis; and 3. circle center and circle center.

Therefore, main factors affecting the coaxiality are circle center positions and axis directions of a measured element and a reference element, especially the axis directions. For example, two cross-sectional circles are measured on a reference cylinder, and a connecting line of the circles is used as the reference axis. Two cross-sectional circles are also measured on a measured cylinder, a straight line is constructed, and then the coaxiality is calculated. Assuming that a distance between two sections on the reference cylinder is 10 mm and a distance between a first section of the reference cylinder and a first section of the measured cylinder is 100 mm, if a circle center position of a second section of the reference cylinder has a measurement error of 5 μm with a circle center position of the first section, then the reference axis has a deviation of 50 μm when extending to the first section of the measured cylinder. In this case, even if the measured cylinder is completely coaxial with the reference cylinder, there will also be an error of 100 μm (a coaxiality tolerance value is a diameter, and 50 μm is a radius).

According to output data of the control device 200, a self-feedback control algorithm compares and analyzes an output coaxiality measurement value of the first pipe fitting 300 with a coaxiality target value of the first pipe fitting 300, automatically adjusts a welding process of a welding program, a welding track, a welding position starting point, a welding direction and first welding parameters, outputs them to the automatic welding robot 100, and gives a welding instruction for welding, wherein the welding position starting point is the first welding starting point and the first welding parameter.

It should be noted that if wire filling welding is involved, welding parameters further comprise control of a wire feeding speed.

According to the groove model measured previously, the welding process may be determined by a teaching system and an expert database, wherein the first welding starting point is set as any point on the first outline.

It can be understood that the teaching system and the expert database are an automatic welding method often used in the welding field. Welding of the first pipe fitting 300 and the structural member 400 has an optimal welding parameter range. According to previous welding experience, the welding robot 100 actually has a regional reference value of welding parameter for each kind of welding, and optimal welding process parameters are formed in continuous practical experience, such as welding under some materials. The optimum welding quality is realized when welding process parameters (a current, a voltage, a welding rod or a welding wire, and welding) are in some ranges, and corresponding welding process parameters are stored in the teaching system and the expert database, and will be called when the same welding environment is encountered later.

During welding of the first pipe fitting 300 and the structural member 400, four laser displacement sensors 510 track a position change track of the first pipe fitting 300 in real time and transmit data to the control device 200, and the control device 200 synchronously calculates a position change direction and the coaxiality of the first pipe fitting 300. For multi-pass/multi-layer welding, during each welding process, the measuring device 500 tracks and measures second position information of the first pipe fitting 300 and a second outline of the groove in real time, so that the control device 200 establishes a welding seam model. Specifically, a control algorithm outputs data through a processor of the control device 200, and automatically adjusts key welding parameters such as a welding speed, a welding current and a welding voltage of the welding process after processing and analysis.

It can be understood that, for multi-pass welding, the control device 200 is configured to be capable of automatically adjusting and resetting a second welding process after N welding seams 900 are completed, the second welding process comprises a second welding starting point 700 and second welding parameters, and N is a natural number.

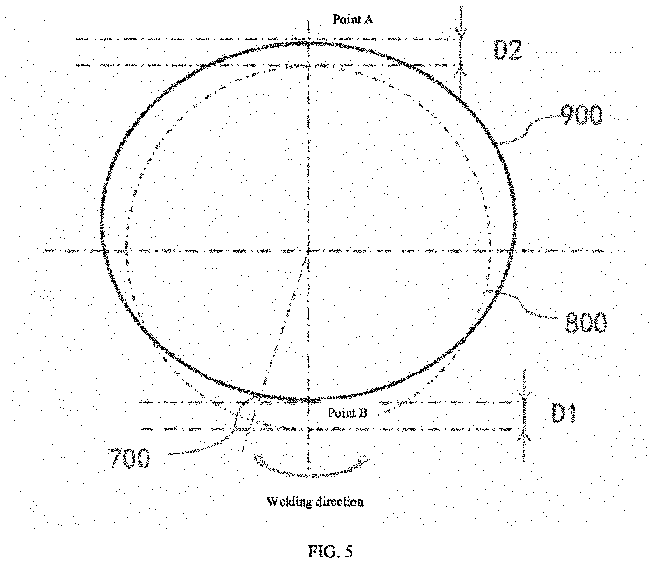

Specifically, with reference to FIG. 5, the arrow in the figure shows a welding direction, the measuring device 500 is configured to record tracks of the N welding seams 900 after the N welding seams 900 are completed, the first pipe fitting 300 is offset relative to the target coaxiality, welding seams corresponding to the target coaxiality of the first pipe fitting 300 are set as N theoretical welding seams 800, the N welding seams 900 are offset relative to the N theoretical welding seams 800. The offset of the N welding seams 900 away from centers of the N theoretical welding seams 800 is defined as a positive offset, and the offset of the N welding seams 900 towards the centers of the N theoretical welding seams 800 is defined as a negative offset, a point of the N welding seams 900 with a maximum positive offset D2 relative to the N theoretical welding seams 800 is a point A and a point with a maximum negative offset D1 is a point B, wherein the second welding starting point 700 is offset from the point B by 4° to 8° in a direction opposite to the welding direction, an offset between current welding seams and the N theoretical welding seams 800 is calculated in real time during welding, an allowable maximum offset is set as D0. When the positive offset is greater than D0, a welding heat input amount is reduced, so as to reduce an amount of deposited metal, and when the negative offset is greater than D0, the welding heat input amount is increased, so as to increase the amount of deposited metal.

It can be understood that the welding heat input amount is also called "linear energy". During fusion welding, heat input by an electric-arc or other heat sources per unit welding seam length along the welding direction is expressed by formula 1:

$$\text{formula 1: } Q = \eta * I * U / V,$$

wherein Q is the welding heat input amount; I is a welding current; U is an electric-arc voltage; v is a welding speed; and $\eta$ is a thermal efficiency coefficient.

It can also be understood that the measuring device 500 can measure the actual coaxiality of the first pipe fitting 300 after the N welding seams 900 are completed. Under influence of a change of the heat input amount or other objective and subjective influences, a welding seam stress is unbalanced, resulting in that the actual coaxiality may deviate from the target coaxiality. Meanwhile, the N actual welding seams may also deviate from the N theoretical welding seams 800, and the welded structure is undesirably deformed. In the present invention, by adjusting a position of the second welding starting point 700, and matching and adjusting the welding heat input amount, the welding deformation can be effectively compensated for, and after welding for N+1 times, the deformation is obviously reduced.

In the present invention, the second welding starting point 700 is offset from the point B by 4° to 8° in the direction opposite to the welding direction, with a theoretical basis that, during welding, a position welded in the previous period may be solidified first, and a position welded later is solidified later, resulting in that the first pipe fitting 300 is deformed towards the point B after N+1 welding seams, and deformation of the $N^{th}$ welding seam 900 is compensated for. The most important thing is that the offset by 4° to 8° can occur at the beginning of welding, and deformation compensation is not obvious due to the low overall temperature of a workpiece, while a position of the point B with a large deformation can be preheated within a welding time of the offset by 4° to 8°, so that the deformation compensation effect at the point B is the best.

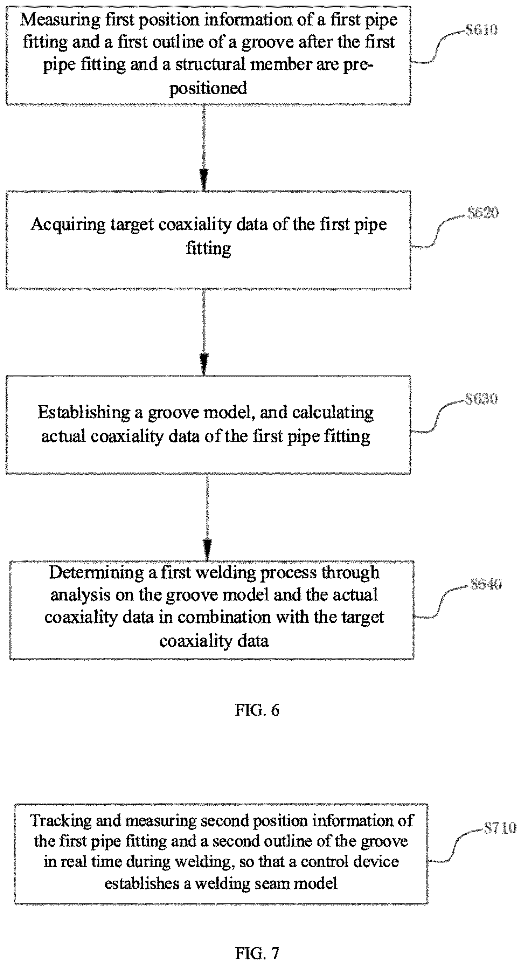

A welding control method used in a welding system 1000 in a second aspect of the present invention is used for welding a first pipe fitting 300 to a structural member 400, and a groove is formed in the structural member 400. The welding system 1000 comprises a welding robot 100, a measuring device 500 and a control device 200. With reference to FIG. 6, the welding control method comprises the following steps.

In step S610, first position information of the first pipe fitting 300 and a first outline of the groove are measured after the first pipe fitting 300 and the structural member 400 are pre-positioned.

It should be noted that the first pipe fitting 300 and the structural member 400 may be pre-positioned by spot welding or fixture fixing. In order to ensure the firmness of fixation and reduce the deformation, the spot welding is preferably used for fixation.

The measuring device 500 and the measuring method may refer to the detailed description of the welding system 1000 above, which will not be repeated herein.

In step S620, target coaxiality data of the first pipe fitting 300 is acquired.

It should be noted that the coaxiality is a location tolerance, and a theoretical correct position is a reference axis. Since points of a measured axis different from the reference axis may appear in all directions in space, a tolerance zone is a cylinder with the reference axis as an axis, and a tolerance value is a diameter of the cylinder, wherein a symbol "$\varphi$" is always added before the tolerance value. The specific measuring method may refer to the detailed description of the welding system 1000 above, which will not be repeated herein.

In step S630, a groove model is established, and actual coaxiality data of the first pipe fitting 300 is calculated.

In step S640, a first welding process is determined through analysis on the groove model and the actual coaxiality data in combination with the target coaxiality data.

It can be understood that the structural member 400 may be set as a second pipe fitting, an end portion of the first pipe fitting 300 is inserted into an end portion of the second pipe fitting, the groove is formed at the end portion of the second pipe fitting, and the groove model is formed by projecting the first outline on a projection plane perpendicular to an axial direction of the first pipe fitting 300.

It can also be understood that the groove model is formed by projecting the first outline on a projection plane perpendicular to an axial direction of the first pipe fitting 300, and a projection angle between the first outline and the projection plane is an acute angle.

It should be noted that the first welding process comprises a first welding starting point and first welding parameters; and the first welding process is determined by a teaching system and an expert database, wherein the first welding starting point is set as any point on the first outline.

In some embodiments, with reference to FIG. 7, the welding control method further comprises the following step.

In step S710, second position information of the first pipe fitting 300 and a second outline of the groove are tracked and measured in real time during welding, so that the control device 200 establishes a welding seam model.

In some embodiments, the first pipe fitting 300 is a circular pipe, and a surface of the structural member 400 on which the groove is formed is an arc surface, as shown in FIG. 4.

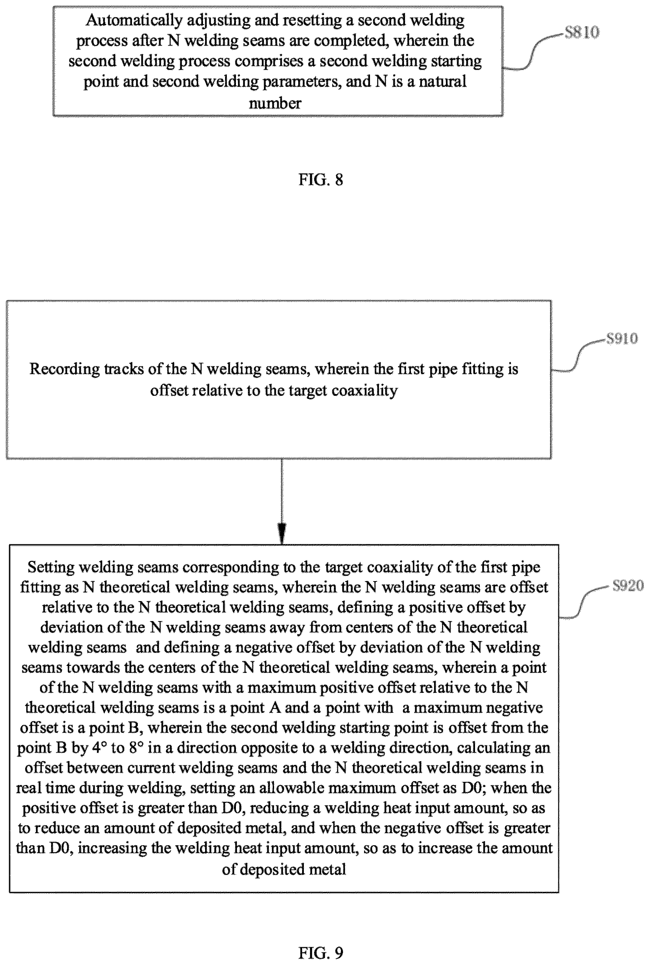

In some embodiments, with reference to FIG. 8, aiming at multi-pass welding, the welding control method further comprises the following step.

In step S810, a second welding process is automatically adjusted and reset after N welding seams 900 are completed, wherein the second welding process comprises a second welding starting point 700 and second welding parameters, and N is a natural number.

It should be noted that the welding parameters comprise a wire feeding speed, a heat input amount, and the like, and influencing factors of the heat input amount comprise a welding speed, a welding power, and the like.

In some embodiments, with reference to FIG. 9, the step of automatically adjusting and resetting the second welding process after the N welding seams 900 are completed, comprises the following steps.

In step S910, tracks of the N welding seams 900 are recorded, wherein the first pipe fitting 300 is offset relative to the target coaxiality.

In step S920, welding seams corresponding to the target coaxiality of the first pipe fitting 300 are set as N theoretical welding seams 800, wherein the N welding seams 900 are offset relative to the N theoretical welding seams 800. The offset of the N welding seams 900 away from centers of the N theoretical welding seams 800 is defined as a positive offset, and the offset of the N welding seams 900 towards the centers of the N theoretical welding seams 800 is defined as a negative offset, wherein a point of the N welding seams 900 with a maximum positive offset relative to the N theoretical welding seams 800 is a point A and a point with a maximum negative offset is a point B, wherein the second welding starting point 700 is offset from the point B by 4° to 8° in a direction opposite to a welding direction, an offset between current welding seams and the N theoretical welding seams 800 is calculated in real time during welding, an allowable maximum offset is set as D0. When the positive offset is greater than D0, a welding heat input amount is reduced, so as to reduce an amount of deposited metal, and when the negative offset is greater than D0, the welding heat input amount is increased, so as to increase the amount of deposited metal.

A welding system 1000 according to an embodiment in a third aspect of the present invention is used for welding a first pipe fitting 300 to a structural member 400, and a groove is formed in the structural member 400, wherein the welding system 1000 comprises a welding robot 100, a measuring device 500 and a control device 200. The measuring device is used for measuring first position information of the groove relative to the first pipe fitting 300 and a first outline of the groove after the pipe fitting and the structural member 400 are pre-positioned. The control device 200 is configured to be capable of obtaining a groove model according to the first position information and the first outline, and determining a first welding process according to the groove model and a first preset program. The groove model is formed by projecting the first outline on a projection plane perpendicular to an axial direction of the first pipe fitting 300, and a projection angle between the first outline and the projection plane is an acute angle. The first preset program is configured to divide the groove model into a plurality of welding zones, and call corresponding welding process parameters from an expert database according to different welding zones.

For the above welding system 1000, aiming at that the groove model is formed by proj ecting the first outline on the projection plane perpendicular to the axial direction of the first pipe fitting 300 and the projection angle between the first outline and the projection plane is the acute angle, the groove model is obtained and the first welding process parameters are determined by acquiring the first position information of the groove relative to the first pipe fitting 300 and the first outline of the groove, i.e., the groove model is divided into the plurality of welding zones and corresponding welding process parameters are called from the expert database according to different welding zones, so that the welding robot 100 completes efficient automatic welding of the first pipe fitting 300 and the structural member 400. Meanwhile, the welding deformation can be reduced, and the structural precision of a welded member can be greatly improved.

It can be understood that division of the groove model into the plurality of welding zones is based on a shape of the groove and welding structure forms of the first pipe fitting 300 and the structural member 400.

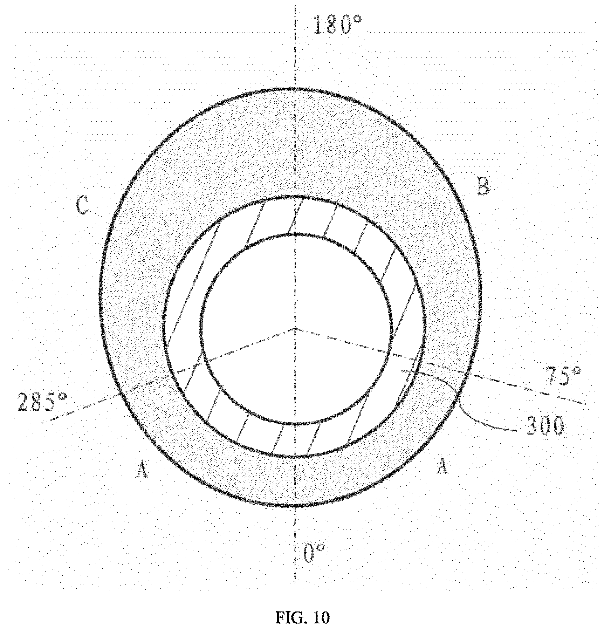

In some embodiments, with reference to FIG. 9, the first pipe fitting 300 is a circular pipe, a surface of the structural member 400 on which the groove is formed is a plane or an arc surface (a structural diagram of the arc surface is shown in FIG. 2), the groove structure is uniform in volume, and the first welding process comprises a welding heat input amount. In order to reduce the welding deformation and greatly improve the welding precision, the welding zones may be divided into a first zone, a second zone and a third zone, as shown in FIG. 10. Taking the lowest point of the first outline as a 0° point, and rotating by 360° around the first outline, the first zone is 285° to 75°, the second zone is 75° to 180°, and the third zone is 180° to 285°. Welding heat input amounts of the first zone, the second zone and the third zone are $\lambda1$, $\lambda2$ and $\lambda3$ respectively, which satisfy that: $\lambda1<\lambda2$, and $\lambda1<\lambda3$. Moreover, change trends of the welding heat input amounts of the second zone and the third zone are the same. Through the above setting, influence of the welding heat input amount on the welding deformation can be balanced.

It can be understood that the measuring device 500 is a laser sensor 510.

It can also be understood that the first pipe fitting 300 and the structural member 400 may be pre-positioned by spot welding.

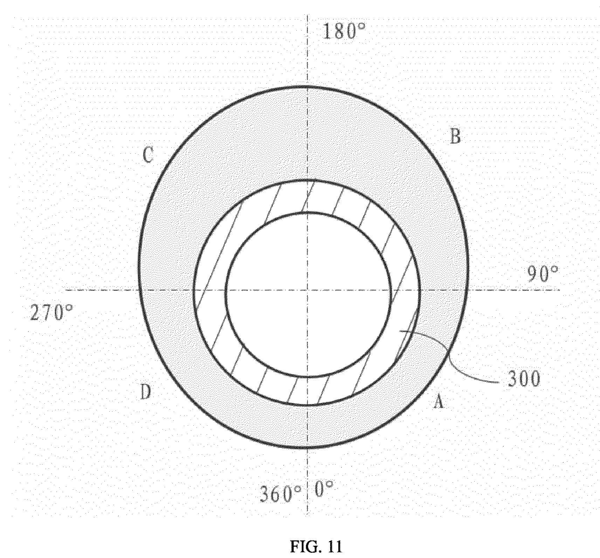

In some embodiments, with reference to FIG. 11, the first welding process comprises a welding heat input amount and a wire feeding speed; and comprises steps of taking the lowest point of the first outline as a 0° point, and rotating by 360° around the first outline, wherein 0° to 90° refers to a quadrant A, and an area and a volume of the groove are gradually increased from a minimum value; 90° to 180° refers to a quadrant B, and the area and the volume of the groove are gradually increased to a maximum value; 180° to 270° refers to a quadrant C, and the area and the volume of the groove are gradually decreased from the maximum value; 270° to 360° refers to a quadrant D, and the area and the volume of the groove are gradually decreased to the minimum value. Welding heat input amounts of the quadrant A, the quadrant B, the quadrant C and the quadrant D are $\lambda1$, $\lambda2$, $\lambda3$ and $\lambda4$ respectively, and wire feeding speeds of the quadrant A, the quadrant B, the quadrant C and the quadrant D are V1, V2, V3 and V4 respectively, which satisfy that: $\lambda1<\lambda2$, $\lambda3>\lambda4$, V1<V2, V3>V4. During welding from 0° to 360°, $\lambda1$ and $\lambda2$ are gradually increased, $\lambda3$ and $\lambda4$ are gradually decreased, V1 and V2 are gradually increased, and V3 and V4 are gradually decreased. The welding heat input amount of 90° is greater than the welding heat input amount of 270°, and the wire feeding speed of 90° is greater than the wire feeding speed of 270°.

It should be noted that the surface of the structural member 400 on which the groove is formed is the plane or the arc surface, and when the surface is the arc surface, it is as shown in FIG. 2 and FIG. 4.

It can be understood that, when the first pipe fitting 300 is welded to the structural member 400, since the projection angle between the first outline and the projection plane is the acute angle, a main reason for such structure lies in the structural design aspect, and in such structural welding, it should be considered in groove design that the area and the volume of the groove at the highest point should be large. Therefore, through the above setting, i.e., in the quadrant A, the area and the volume of the groove are gradually increased from the minimum value; in the quadrant B, the area and the volume of the groove are gradually increased to the maximum value; in the quadrant C, the area and the volume of the groove are gradually decreased from the maximum value; and in the D quadrant, the area and the volume of the groove are gradually decreased to the minimum value, the deposition amount at the highest point of the first outline can be large.

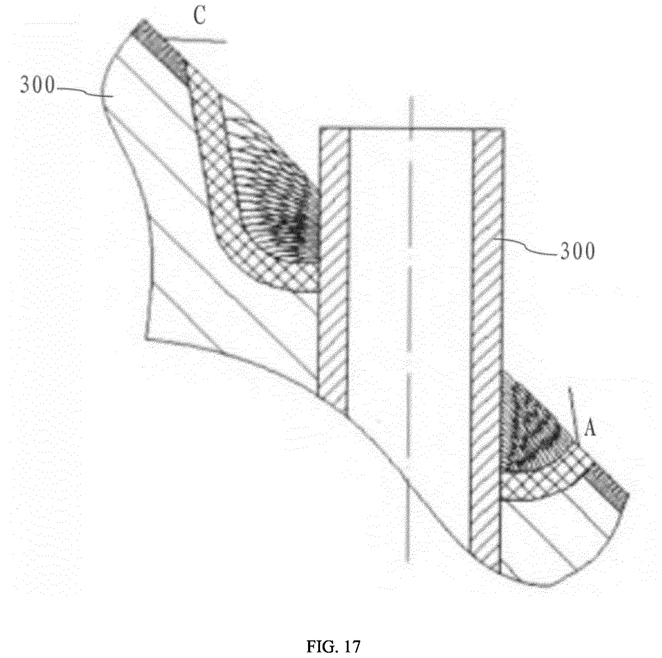

A welded structural member of the first pipe fitting 300 and the structural member 400 is as shown in FIG. 17, which specifically shows a longitudinal sectional view from a point A to a point C. It can be seen from the figure that the amount of deposited metal at the point C is greater than that at the point A.

Accordingly, in order to match with a change of the above deposition amount, the welding heat input amounts of the quadrant A, the quadrant B, the quadrant C and the quadrant D are accordingly set as $\lambda1$, $\lambda2$, $\lambda3$ and $\lambda4$ respectively, and the wire feeding speeds of the quadrant A, the quadrant B, the quadrant C and the quadrant D are accordingly set as V1, V2, V3 and V4 respectively, which satisfy that: $\lambda1<\lambda2$, $\lambda3>\lambda4$, V1<V2 and V3>V4. During welding from 0° to 360°, $\lambda1$ and $\lambda2$ are gradually increased, $\lambda3$ and $\lambda4$ are gradually decreased, V1 and V2 are gradually increased, and V3 and V4 are gradually decreased.

Crucially, the welding heat input amount of 90° should be greater than the welding heat input amount of 270°, and the wire feeding speed of 90° should be greater than the wire feeding speed of 270°. Since the overall temperature of a workpiece is gradually increased during welding, the deposition amount of a welding wire in the later period will be greater than that in the previous period under the same heat input amount. Therefore, the heat input amount of 270° should be decreased compared with the heat input amount of 90°.

In some embodiments, for multi-pass welding, the measuring device 500 is configured to be capable of acquiring second position information of a welding seam after welding relative to the first pipe fitting 300 and a second outline of the welding seam, and the control device 200 is configured to be capable of obtaining a welding seam model according to the second position information and the second outline, and determining a second welding process according to the welding seam model and a second preset program.

In some embodiments, the second welding process comprises a welding starting point, and the control device 200 is further configured to be capable of obtaining actual coaxiality data of the first pipe fitting 300 according to the welding seam model, and determining the welding starting point through analysis on the welding seam model and the actual coaxiality data in combination with target coaxiality data.

Specifically, with reference to FIG. 5, the arrow in the figure shows a welding direction, the measuring device 500 is configured to record tracks of the N welding seams 900 after the N welding seams 900 are completed, N is a natural number, the first pipe fitting 300 is offset relative to the target coaxiality, welding seams corresponding to the target coaxiality of the first pipe fitting 300 are set as N theoretical welding seams 800, the N welding seams 900 are offset relative to the N theoretical welding seams 800. The offset of the N welding seams 900 away from centers of the N theoretical welding seams 800 is defined as a positive offset, and the offset of the N welding seams 900 towards the centers of the N theoretical welding seams 800 is defined as a negative offset, wherein a point of the N welding seams 900 with a maximum positive offset relative to the N theoretical welding seams 800 is a point A and a point with a maximum negative offset is a point B, wherein the welding starting point is offset from the point A by 4° to 8° in a direction opposite to the welding direction.

It can be understood that the measuring device 500 can measure the actual coaxiality of the first pipe fitting 300 after the N welding seams 900 are completed. Under influence of change of the heat input amount or other objective and subjective influences, a welding seam stress is unbalanced, resulting in that the actual coaxiality may deviate from the target coaxiality. Meanwhile, the N actual welding seams may also deviate from the N theoretical welding seams 800, and a welded structure is undesirably deformed. In the present invention, by adjusting a position of the second welding starting point 700, the welding deformation can be effectively compensated for, and after welding for N+1 times, the deformation is obviously reduced.

In the present invention, the second welding starting point 700 is offset from the point B by 4° to 8° in the opposite direction along the welding direction, with a theoretical basis that, during welding, a position welded in the previous period may be solidified first, and a position welded later is solidified later, resulting in that the first pipe fitting 300 is deformed towards the point B after N+1 welding seams, and deformation of the $N^{th}$ welding seam 900 is compensated for. The most important thing is that the offset by 4° to 8° can occur at the beginning of welding, and deformation compensation is not obvious due to the low overall temperature of a workpiece, while a position of the point B with a large deformation can be preheated within a welding time of the offset by 4° to 8°, so that the deformation compensation effect at the point B is the best.

In some embodiments, the second preset program is configured to divide the welding seam model into a plurality of welding zones, and call corresponding welding process parameters from an expert database according to different welding zones.

Specifically, the welding process parameters comprise a wire feeding speed and a welding pulse current during welding. Similarly, the groove is divided into four zones, as shown in FIG. 11, and a trained machine learning algorithm is used to train optimal welding parameters with different residual heights and weld widths under 0°, 90° (270°) and 180° (shapes of welding seams under 90° and 270° are basically the same, and required welding parameters are understood to be the same) through machine learning and expert database information. For example, a width and a residual height of a first welding seam require that a wire feeding speed (Vs) and a welding pulse current (I) are: 90° and 270° (V1s1 and I1s1), 0° (V1s2 and I1s2) and 180° (V1s3 and I1s3); a width and a residual height of a second welding seam require that a wire feeding speed (Vs) and a welding pulse current (I) are: 90° and 270° (V2s1 and I2s1), 0° (V2s2 and I2s2) and 180° (V2s3 and I2s3); and

a width and a residual height of an $N^{th}$ welding seam 900 require that a wire feeding speed (Vs) and a welding pulse current (I) are: 90° and 270° (Vns1 and I1s1), 0° (Vns2 and I1s2) and 180° (Vns3 and Ins3).

A relationship between a welding current and a wire feeding speed of the same welding seam at four angles is that:

$$180° \text{ (Vns2 and Ins2)} > 90° = 270° \text{ (Vns1 and Ins1)} > 0° \text{ (Vns3 and Ins3)}$$

In welding of an $n^{th}$ welding seam:

when a welding gun moves from 90° to 180°, a smoothing algorithm is used to smoothly increase the wire feeding speed from Vns1 to Vns2 and smoothly increase the pulse current from Ins1 to Ins2 during welding; when the welding gun moves from 180° to 270°, the smoothing algorithm is used to smoothly decrease the wire feeding speed from Vns2 to Vns1 and smoothly decrease the pulse current from Ins2 to Ins1 during welding; when the welding gun moves from 270° to 0°, the smoothing algorithm is used to smoothly decrease the wire feeding speed from Vns1 to Vns3 and smoothly decrease the pulse current from Ins1 to Ins3 during welding; and when the welding gun moves from 0° to 90°, the smoothing algorithm is used to smoothly increase the wire feeding speed from Vns3 to Vns1 and smoothly increase the pulse current from Ins2 to Ins1.

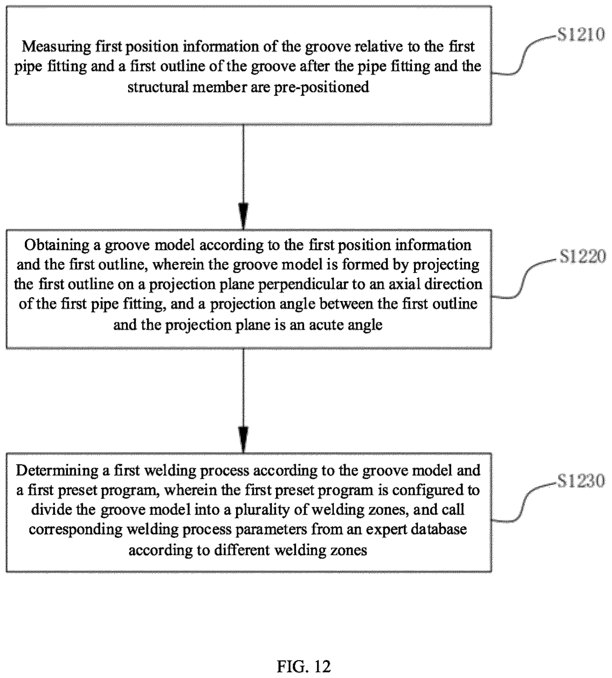

A welding control method used in a welding system 1000 according to an embodiment in a fourth aspect of the present invention is used for welding a first pipe fitting 300 to a structural member 400, and a groove is formed in the structural member 400. The welding system 1000 comprises a welding robot 100, a measuring device 500 and a control device 200. With reference to FIG. 12, the welding control method comprises the following steps.

In step S1210, first position information of the groove relative to the first pipe fitting 300 and a first outline of the groove are measured after the pipe fitting and the structural member 400 are pre-positioned.

In step S1220, a groove model is obtained according to the first position information and the first outline, wherein the groove model is formed by projecting the first outline on a projection plane perpendicular to an axial direction of the first pipe fitting 300, and a projection angle between the first outline and the projection plane is an acute angle.

In step S1230, a first welding process is determined according to the groove model and a first preset program, wherein the first preset program is configured to divide the groove model into a plurality of welding zones, and call corresponding welding process parameters from an expert database according to different welding zones.

In the welding control method according to the embodiment of the present invention, the groove model is obtained and the first welding process parameters are determined by acquiring the first position information of the groove relative to the first pipe fitting 300 and the first outline of the groove, i.e., the groove model is divided into the plurality of welding zones and corresponding welding process parameters are called from the expert database according to different welding zones, so that the welding robot 100 completes efficient automatic welding of the first pipe fitting 300 and the structural member 400. Meanwhile, the welding deformation can be reduced, and the welding precision can be greatly improved.

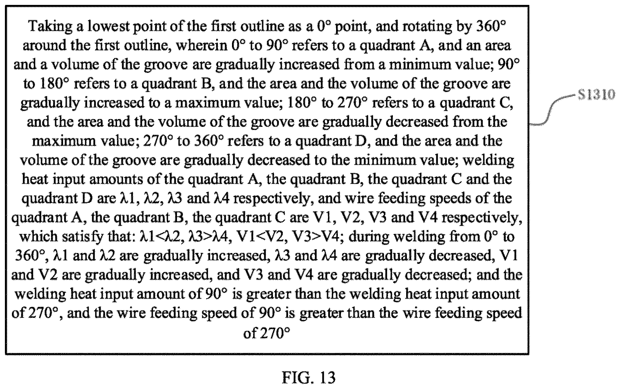

In some embodiments, the first welding process comprises a welding heat input amount and a wire feeding speed. With reference to FIG. 13, the step of determining the first welding process parameters according to the groove model and the first preset program comprises the following step.

In step S13 10, a lowest point of the first outline is taken as a 0° point, and rotation is performed by 360° around the first outline, wherein 0° to 90° refers to a quadrant A, and an area and a volume of the groove are gradually increased from a minimum value; 90° to 180° refers to a quadrant B, and the area and the volume of the groove are gradually increased to a maximum value; 180° to 270° refers to a quadrant C, and the area and the volume of the groove are gradually decreased from the maximum value; 270° to 360° refers to a quadrant D, and the area and the volume of the groove are gradually decreased to the minimum value; welding heat input amounts of the quadrant A, the quadrant B, the quadrant C and the quadrant D are $\lambda1$, $\lambda2$, $\lambda3$ and $\lambda4$ respectively, and wire feeding speeds of the quadrant A, the quadrant B, the quadrant C and the quadrant D are V1, V2, V3 and V4 respectively, which satisfy that: $\lambda1<\lambda2$, $\lambda3>\lambda4$, V1<V2, V3>V4; during welding from 0° to 360°, $\lambda1$ and $\lambda2$ are gradually increased, $\lambda3$ and $\lambda4$ are gradually decreased, V1 and V2 are gradually increased, and V3 and V4 are gradually decreased; and the welding heat input amount of 90° is greater than the welding heat input amount of 270°, and the wire feeding speed of 90° is greater than the wire feeding speed of 270°.

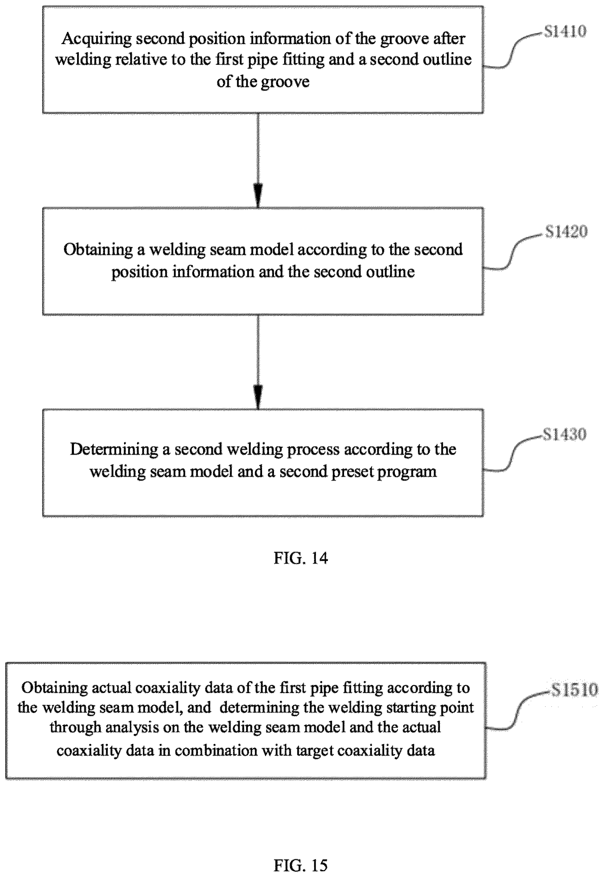

In some embodiments, for multi-pass welding, with reference to FIG. 14, the welding control method further comprises the following steps.

In step S1410, second position information of the groove after welding relative to the first pipe fitting 300 and a second outline of the groove are acquired.

In step S1420, a welding seam model is obtained according to the second position information and the second outline.

In step S1430, a second welding process is determined according to the welding seam model and a second preset program.

In some embodiments, the second welding process comprises a welding starting point, and with reference to FIG. 15, the welding control method further comprises the following step.

In step S1510, actual coaxiality data of the first pipe fitting 300 is obtained according to the welding seam model, and the welding starting point is determined through analysis on the welding seam model and the actual coaxiality data in combination with target coaxiality data.

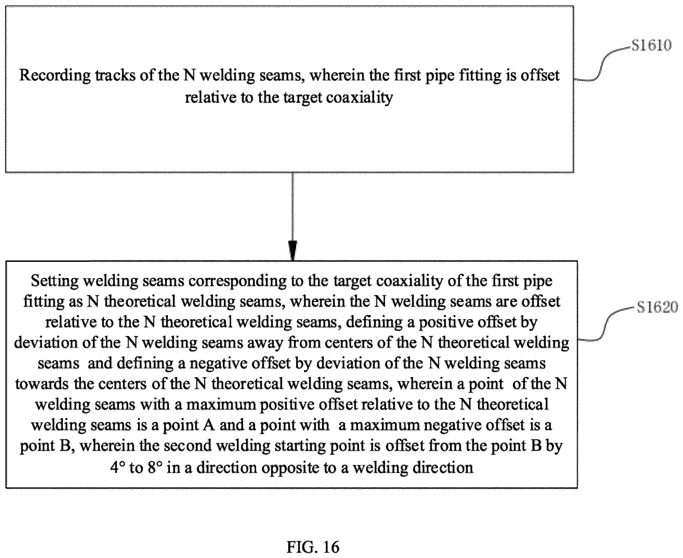

In some embodiments, with reference to FIG. 16, the step of determining the welding starting point through analysis on the welding seam model and the actual coaxiality data in combination with the target coaxiality data, comprises the following steps.

In step S1610, tracks of N welding seams 900 are recorded, wherein the first pipe fitting 300 is offset relative to the target coaxiality, and N is a natural number.

In step S1620, welding seams corresponding to the target coaxiality of the first pipe fitting 300 are set as N theoretical welding seams 800, wherein the N welding seams 900 are offset relative to the N theoretical welding seams 800. The offset of the N welding seams 900 away from centers of the N theoretical welding seams 800 is defined as a positive offset, and the offset of the N welding seams 900 towards the centers of the N theoretical welding seams 800 is defined as a negative offset, wherein a point of the N welding seams 900 with a maximum positive offset relative to the N theoretical welding seams 800 is a point A and a point with a maximum negative offset is a point B, wherein the second welding starting point 700 is offset from the point B by 4° to 8° in a direction opposite to a welding direction.

In some embodiments, the second preset program is configured to divide the welding seam model into a plurality of welding zones, and call corresponding welding process parameters from an expert database according to different welding zones.

Specifically, the welding process parameters comprise a wire feeding speed and a welding pulse current during welding. Similarly, the groove is divided into four zones, as shown in FIG. 11, and a trained machine learning algorithm is used to train optimal welding parameters with different residual heights and weld widths under 0°, 90° (270°) and 180° (shapes of welding seams under 90° and 270° are basically the same, and required welding parameters are understood to be the same) through machine learning and expert database information. Therefore, automatic calling of welding process parameters for different zones is realized.

In the description of the present invention, the description with reference to the terms "one embodiment", "some embodiments", "schematic embodiments", "examples", "specific examples", or "some examples" refers to that the specific features, structures, materials, or characteristics described in combination with the embodiment or example are included in at least one embodiment or example of the present invention. In the specification, the schematic representation of the above terms does not necessarily mean the same embodiment or example. Moreover, the specific features, structures, materials or characteristics described may be combined in any one or more embodiments or examples in a suitable manner.

Although the embodiments of the present invention have been shown and described, those of ordinary skills in the art may understand that various changes, modifications, substitutions and variations may be made to these embodiments without departing from the principle and purpose of the present invention, and the scope of the present invention is defined by the claims and their equivalents.

**Claims**

1. A welding system for welding a first pipe fitting to a structural member, a groove being formed in the structural member, wherein the welding system comprises:

   a welding robot,
   a measuring device for measuring first position information of the first pipe fitting and a first outline of the groove after the first pipe fitting and the structural member are pre-positioned; and
   a control device configured to be capable of establishing a groove model according to the first position information and the first outline, calculating actual coaxiality data of the first pipe fitting, and determining a first welding process through analysis on the groove model and the actual coaxiality data in combination with target coaxiality data.

2. The welding system according to claim 1, wherein the structural member is a second pipe fitting, an end portion of the first pipe fitting is inserted into an end portion of the second pipe fitting, the groove is formed at the end portion of the second pipe fitting, and the groove model is formed by projecting the first outline on a projection plane perpendicular to an axial direction of the first pipe fitting.

3. The welding system according to claim 1, wherein the groove model is formed by projecting the first outline on a projection plane perpendicular to an axial direction of the first pipe fitting, and a projection angle between the first outline and the projection plane is an acute angle.

4. The welding system according to claim 2 or 3, wherein the first welding process comprises a first welding starting point and first welding parameters.

5. The welding system according to claim 4, wherein the first welding process is determined by a teaching system and an expert database, wherein the first welding starting point is set as any point on the first outline.

6. The welding system according to claim 4, wherein the measuring device is configured to track and measure second position information of the first pipe fitting and a second outline of the groove in real time during welding, and establish a welding seam model.

7. The welding system according to claim 4, wherein for multi-pass welding, the control device is configured to be capable of automatically adjusting and resetting a second welding process after N welding seams are completed, the second welding process comprises a second welding starting point and second welding parameters, and N is a natural number.

8. The welding system according to claim 7, wherein the measuring device is configured to record tracks of the N welding seams after the N welding seams are completed, the first pipe fitting is offset relative to the target coaxiality, welding seams corresponding to the target coaxiality of the first pipe fitting are set as N theoretical welding seams, the N welding seams are offset relative to the N theoretical welding seams, a positive offset is defined by deviation of N welding seams away from centers of the N theoretical welding seams and a negative offset is defined by deviation of the N welding seams towards the centers of the N theoretical welding seams, a point of the N welding seams with a maximum positive offset relative to the N theoretical welding seams is a point A and a point with a maximum negative offset is a point B, wherein the second welding starting point is offset from the point B by 4° to 8° in a direction opposite to a welding direction, an offset between current welding seams and the N theoretical welding seams is calculated in real time during welding, an allowable maximum offset is set as D0; when the positive offset is greater than D0, a welding heat input amount is reduced, so as to reduce an amount of deposited metal, and when the negative offset is greater than D0, the welding heat input amount is increased, so as to increase the amount of deposited metal.

9. The welding system according to claim 1, wherein the first pipe fitting is a circular pipe, and a surface of the structural member on which the groove is formed is an arc surface.

10. The welding system according to claim 1, wherein the measuring device comprises an adjustable bracket, and the adjustable bracket comprises:

> a mounting seat for fixing the measuring device;
> a supporting rod with one end movably connected to the mounting seat;
> an annular mounting plate movably mounted at the other end of the supporting rod, wherein an avoidance space is formed inside the annular mounting plate; and
> a sensor bracket detachably mounted on the annular mounting plate.

11. The welding system according to claim 10, wherein the annular mounting plate comprises a first mounting plate and a second mounting plate which are movably connected, so that a dimension of the avoidance space is adjustable.

12. The welding system according to claim 10, wherein the mounting seat is a magnetic mounting seat.

13. The welding system according to claim 10, wherein the first mounting plate and the second mounting plate are rotatable in a first direction, so as to open or close the avoidance space.

14. The welding system according to claim 13, wherein the first mounting plate and/or the second mounting plate comprises a rotating plate rotatable in a second direction, the second direction is perpendicular to the first direction, and the sensor bracket is mounted on the rotating plate.

15. The welding system according to claim 14, wherein the first mounting plate and the second mounting plate are both L-shaped, the first mounting plate comprises a first rotating plate and a second rotating plate, the second mounting plate comprises a third rotating plate and a fourth rotating plate, and the first rotating plate, the second rotating plate, the third rotating plate and the fourth rotating plate are all provided with the sensor bracket.

16. The welding system according to claim 10, wherein the sensor bracket is capable of rotating relative to the sensor bracket.

17. A welding control method used in a welding system for welding a first pipe fitting to a structural member, a groove being formed in the structural member, wherein the welding system comprises a welding robot, a measuring device and a control device, and the welding control method comprises the following steps of:

> measuring first position information of the first pipe fitting and a first outline of the groove after the first pipe fitting and the structural member are pre-positioned;
> acquiring target coaxiality data of the first pipe fitting;
> establishing a groove model, and calculating actual coaxiality data of the first pipe fitting; and
> determining a first welding process through analysis on the groove model and the actual coaxiality data in combination with the target coaxiality data.

18. The welding control method according to claim 17, wherein the structural member is a second pipe fitting, an end portion of the first pipe fitting is inserted into an end portion of the second pipe fitting, the groove is formed at the end portion of the second pipe fitting, and the groove model is formed by projecting the first outline on a projection plane perpendicular to an axial direction of the first pipe fitting.

19. The welding control method according to claim 17, wherein the groove model is formed by projecting the first outline on a projection plane perpendicular to an axial direction of the first pipe fitting, and a projection angle between the first outline and the projection plane is an acute angle.

20. The welding control method according to claim 18 or 19, wherein the first welding process comprises a first welding starting point and first welding parameters; and the first welding process is determined by a teaching system and an expert database, wherein the first welding starting point is set as any point on the first outline.

21. The welding control method according to claim 17, wherein the welding control method further comprises:
tracking and measuring second position information of the first pipe fitting and a second outline of the groove in real time during welding, and establishing a welding seam model.

22. The welding control method according to claim 17, wherein the first pipe fitting is a circular pipe, and a surface of the structural member on which the groove is formed is an arc surface.

23. The welding control method according to claim 17, wherein for multi-pass welding, the welding control method further comprises the following step of:
automatically adjusting and resetting a second welding process after N welding seams are completed, wherein the second welding process comprises a second welding starting point and second welding parameters, and N is a natural number.

24. The welding control method according to claim 23, wherein the step of automatically adjusting and resetting the second welding process after the N welding seams are completed, comprises the following steps of:

recording tracks of the N welding seams, wherein the first pipe fitting is offset relative to the target coaxiality; setting welding seams corresponding to the target coaxiality of the first pipe fitting as N theoretical welding seams, wherein the N welding seams are offset relative to the N theoretical welding seams, defining a positive offset by deviation of the N welding seams away from centers of the N theoretical welding seams and defining a negative offset by deviation of the N welding seams to towards the centers of the N theoretical welding seams, wherein a point of the N welding seams with a maximum positive offset relative to the N theoretical welding seams is a point A and a point with a maximum negative offset is a point B, wherein the second welding starting point is offset from the point A by 4° to 8° in a direction opposite to a welding direction, calculating an offset between current welding seams and the N theoretical welding seams in real time during welding, setting an allowable maximum offset as D0; when the positive offset is greater than D0, reducing a welding heat input amount, so as to reduce an amount of deposited metal, and when the negative offset is greater than D0, increasing the welding heat input amount, so as to increase the amount of deposited metal.

25. A welding system for welding a first pipe fitting to a structural member, a groove being formed in the structural member, wherein the welding system comprises:

a welding robot;
a measuring device for measuring first position information of the groove relative to the first pipe fitting and a first outline of the groove after the pipe fitting and the structural member are pre-positioned; and
a control device configured to be capable of obtaining a groove model according to the first position information and the first outline, and determining a first welding process according to the groove model and a first preset program;
wherein, the groove model is formed by projecting the first outline on a projection plane perpendicular to an axial direction of the first pipe fitting, and a projection angle between the first outline and the projection plane is an acute angle; and the first preset program is configured to divide the groove model into a plurality of welding zones, and call corresponding welding process parameters from an expert database according to different welding zones.

26. The welding system according to claim 25, wherein the first welding process comprises a welding heat input amount and a wire feeding speed; and comprises the steps of taking a lowest point of the first outline as a 0° point, and rotating by 360° around the first outline, wherein 0° to 90° refers to a quadrant A, and an area and a volume of the groove are gradually increased from a minimum value; 90° to 180° refers to a quadrant B, and the area and the volume of the groove are gradually increased to a maximum value; 180° to 270° refers to a quadrant C, and the area and the volume of the groove are gradually decreased from the maximum value; 270° to 360° refers to a quadrant D, and the area and the volume of the groove are gradually decreased to the minimum value; welding heat input amounts of the quadrant A, the quadrant B, the quadrant C and the quadrant D are $\lambda 1$, $\lambda 2$, $\lambda 3$ and $\lambda 4$ respectively, and wire feeding speeds of the quadrant A, the quadrant B, the quadrant C and the quadrant D are V1, V2, V3 and V4 respectively, which satisfy that: $\lambda 1 < \lambda 2$, $\lambda 3 > \lambda 4$, V1<V2, V3>V4; during welding from 0° to 360°, $\lambda 1$ and $\lambda 2$ are gradually increased, $\lambda 3$ and $\lambda 4$ are gradually decreased, V1 and V2 are gradually increased, and V3 and V4 are gradually decreased; and the welding heat input amount of 90° is greater than the welding heat input amount of 270°, and the wire feeding speed of 90° is greater than the wire feeding speed of 270°.

27. The welding system according to claim 25 or 26, wherein for multi-pass welding, the measuring device is configured to be capable of acquiring second position information of a welding seam after welding relative to the first pipe fitting and a second outline of the welding seam, and the control device is configured to be capable of obtaining a welding seam model according to the second position information and the second outline, and determining a second welding process according to the welding seam model and a second preset program.

28. The welding system according to claim 27, wherein the second welding process comprises a welding starting point, and the control device is further configured to be capable of obtaining actual coaxiality data of the first pipe fitting according to the welding seam model, and determining the welding starting point through analysis on the welding seam model and the actual coaxiality data in combination with target coaxiality data.

29. The welding system according to claim 28, wherein the measuring device is configured to record tracks of the N welding seams after the N welding seams are completed, N is a natural number, the first pipe fitting is offset relative to the target coaxiality, welding seams corresponding to the target coaxiality of the first pipe fitting are set as N theoretical welding seams, the N welding seams are offset relative to the N theoretical welding seams, a positive offset is defined by deviation of N welding seams away from centers of the N theoretical welding seams and a negative offset is defined by deviation of the N welding seams towards the centers of the N theoretical welding seams, a point of the N welding seams with a maximum positive offset relative to the N theoretical welding seams is a point A and a point with a maximum negative offset is a point B, wherein the welding starting point is offset from the point A by 4° to 8° in a direction opposite to a welding direction.

30. The welding system according to claim 27, wherein the second preset program is configured to divide the welding seam model into a plurality of welding zones, and call corresponding welding process parameters from an expert database according to different welding zones.

31. The welding system according to claim 25 or 26, wherein the measuring device is a laser sensor.

32. The welding system according to claim 25 or 26, wherein the first pipe fitting and the structural member are pre-positioned by spot welding.

33. A welding control method used in a welding system for welding a first pipe fitting to a structural member, a groove being formed in the structural member, wherein the welding system comprises a welding robot, a measuring device and a control device, and the welding control method comprises the following steps of:

measuring first position information of the groove relative to the first pipe fitting and a first outline of the groove after the pipe fitting and the structural member are pre-positioned;
obtaining a groove model according to the first position information and the first outline, wherein the groove model is formed by projecting the first outline on a projection plane perpendicular to an axial direction of the first pipe fitting, and a projection angle between the first outline and the projection plane is an acute angle; and determining a first welding process according to the groove model and a first preset program, wherein the first preset program is configured to divide the groove model into a plurality of welding zones, and call corresponding welding process parameters from an expert database according to different welding zones.

34. The welding control method according to claim 33, wherein the first welding process comprises a welding heat input amount and a wire feeding speed; and the step of determining the first welding process parameters according to the groove model and the first preset program comprises the following step of:
taking a lowest point of the first outline as a 0° point, and rotating by 360° around the first outline, wherein 0° to 90° refers to a quadrant A, and an area and a volume of the groove are gradually increased from a minimum value; 90° to 180° refers to a quadrant B, and the area and the volume of the groove are gradually increased to a maximum value; 180° to 270° refers to a quadrant C, and the area and the volume of the groove are gradually decreased from the maximum value; 270° to 360° refers to a quadrant D, and the area and the volume of the groove are gradually decreased to the minimum value; welding heat input amounts of the quadrant A, the quadrant B, the quadrant C and the quadrant D are $\lambda 1$, $\lambda 2$, $\lambda 3$ and $\lambda 4$ respectively, and wire feeding speeds of the quadrant A, the quadrant B, the quadrant C and the quadrant D are V1, V2, V3 and V4 respectively, which satisfy that: $\lambda 1<\lambda 2$, $\lambda 3>\lambda 4$, V1<V2, V3>V4; during welding from 0° to 360°, $\lambda 1$ and $\lambda 2$ are gradually increased, $\lambda 3$ and $\lambda 4$ are gradually decreased, V1 and V2 are gradually increased, and V3 and V4 are gradually decreased; and the welding heat input amount of 90° is greater than the welding heat input amount of 270°, and the wire feeding speed of 90° is greater than the wire feeding speed of 270°.

35. The welding control method according to claim 33 or 34, wherein for multi-pass welding, the welding control method further comprises the following steps of:

   acquiring second position information of the groove after welding relative to the first pipe fitting and a second outline of the groove;
   obtaining a welding seam model according to the second position information and the second outline; and
   determining a second welding process according to the welding seam model and a second preset program.

36. The welding control method according to claim 35, wherein the second welding process comprises a welding starting point, and the welding control method further comprises the following step of:
   obtaining actual coaxiality data of the first pipe fitting according to the welding seam model, and determining the welding starting point through analysis on the welding seam model and the actual coaxiality data in combination with target coaxiality data.

37. The welding control method according to claim 36, wherein the step of determining the welding starting point through analysis on the welding seam model and the actual coaxiality data in combination with the target coaxiality data, comprises the following steps of:

   recording tracks of N welding seams, wherein the first pipe fitting is offset relative to the target coaxiality, and N is a natural number; and
   setting welding seams corresponding to the target coaxiality of the first pipe fitting as N theoretical welding seams, wherein the N welding seams are offset relative to the N theoretical welding seams, defining a positive offset by deviation of the N welding seams away from centers of the N theoretical welding seams and defining a negative offset by deviation of the N welding seams towards the centers of the N theoretical welding seams, wherein a point of the N welding seams with a maximum positive offset relative to the N theoretical welding seams is a point A and a point with a maximum negative offset is a point B, wherein the second welding starting point is offset from the point A by 4° to 8° in a direction opposite to a welding direction.

38. The welding control method according to claim 35, wherein the second preset program is configured to divide the welding seam model into a plurality of welding zones, and call corresponding welding process parameters from an expert database according to different welding zones.

FIG. 1

FIG. 2

22

FIG. 3

FIG. 4

FIG. 5

Measuring first position information of a first pipe fitting and a first outline of a groove after the first pipe fitting and a structural member are pre-positioned — S610

Acquiring target coaxiality data of the first pipe fitting — S620

Establishing a groove model, and calculating actual coaxiality data of the first pipe fitting — S630

Determining a first welding process through analysis on the groove model and the actual coaxiality data in combination with the target coaxiality data — S640

FIG. 6

Tracking and measuring second position information of the first pipe fitting and a second outline of the groove in real time during welding, so that a control device establishes a welding seam model — S710

FIG. 7

Automatically adjusting and resetting a second welding process after N welding seams are completed, wherein the second welding process comprises a second welding starting point and second welding parameters, and N is a natural number

S810

FIG. 8

Recording tracks of the N welding seams, wherein the first pipe fitting is offset relative to the target coaxiality

S910

Setting welding seams corresponding to the target coaxiality of the first pipe fitting as N theoretical welding seams, wherein the N welding seams are offset relative to the N theoretical welding seams, defining a positive offset by deviation of the N welding seams away from centers of the N theoretical welding seams and defining a negative offset by deviation of the N welding seams towards the centers of the N theoretical welding seams, wherein a point of the N welding seams with a maximum positive offset relative to the N theoretical welding seams is a point A and a point with a maximum negative offset is a point B, wherein the second welding starting point is offset from the point B by 4° to 8° in a direction opposite to a welding direction, calculating an offset between current welding seams and the N theoretical welding seams in real time during welding, setting an allowable maximum offset as D0; when the positive offset is greater than D0, reducing a welding heat input amount, so as to reduce an amount of deposited metal, and when the negative offset is greater than D0, increasing the welding heat input amount, so as to increase the amount of deposited metal

S920

FIG. 9

FIG. 10

FIG. 11

Measuring first position information of the groove relative to the first pipe fitting and a first outline of the groove after the pipe fitting and the structural member are pre-positioned

S1210

Obtaining a groove model according to the first position information and the first outline, wherein the groove model is formed by projecting the first outline on a projection plane perpendicular to an axial direction of the first pipe fitting, and a projection angle between the first outline and the projection plane is an acute angle

S1220

Determining a first welding process according to the groove model and a first preset program, wherein the first preset program is configured to divide the groove model into a plurality of welding zones, and call corresponding welding process parameters from an expert database according to different welding zones

S1230

FIG. 12

Taking a lowest point of the first outline as a 0° point, and rotating by 360° around the first outline, wherein 0° to 90° refers to a quadrant A, and an area and a volume of the groove are gradually increased from a minimum value; 90° to 180° refers to a quadrant B, and the area and the volume of the groove are gradually increased to a maximum value; 180° to 270° refers to a quadrant C, and the area and the volume of the groove are gradually decreased from the maximum value; 270° to 360° refers to a quadrant D, and the area and the volume of the groove are gradually decreased to the minimum value; welding heat input amounts of the quadrant A, the quadrant B, the quadrant C and the quadrant D are $\lambda 1$, $\lambda 2$, $\lambda 3$ and $\lambda 4$ respectively, and wire feeding speeds of the quadrant A, the quadrant B, the quadrant C are V1, V2, V3 and V4 respectively, which satisfy that: $\lambda 1 < \lambda 2$, $\lambda 3 > \lambda 4$, V1<V2, V3>V4; during welding from 0° to 360°, $\lambda 1$ and $\lambda 2$ are gradually increased, $\lambda 3$ and $\lambda 4$ are gradually decreased, V1 and V2 are gradually increased, and V3 and V4 are gradually decreased; and the welding heat input amount of 90° is greater than the welding heat input amount of 270°, and the wire feeding speed of 90° is greater than the wire feeding speed of 270°

S1310

FIG. 13

EP 4 438 214 A1

Acquiring second position information of the groove after welding relative to the first pipe fitting and a second outline of the groove ⟋S1410

Obtaining a welding seam model according to the second position information and the second outline ⟋S1420

Determining a second welding process according to the welding seam model and a second preset program ⟋S1430

FIG. 14

Obtaining actual coaxiality data of the first pipe fitting according to the welding seam model, and determining the welding starting point through analysis on the welding seam model and the actual coaxiality data in combination with target coaxiality data ⟋S1510

FIG. 15

Recording tracks of the N welding seams, wherein the first pipe fitting is offset relative to the target coaxiality

S1610

Setting welding seams corresponding to the target coaxiality of the first pipe fitting as N theoretical welding seams, wherein the N welding seams are offset relative to the N theoretical welding seams, defining a positive offset by deviation of the N welding seams away from centers of the N theoretical welding seams and defining a negative offset by deviation of the N welding seams towards the centers of the N theoretical welding seams, wherein a point of the N welding seams with a maximum positive offset relative to the N theoretical welding seams is a point A and a point with a maximum negative offset is a point B, wherein the second welding starting point is offset from the point B by 4° to 8° in a direction opposite to a welding direction

S1620

FIG. 16

FIG. 17

### INTERNATIONAL SEARCH REPORT

| International application No. |
|---|
| **PCT/CN2022/076911** |

**A. CLASSIFICATION OF SUBJECT MATTER**

B23K 9/127(2006.01)i

According to International Patent Classification (IPC) or to both national classification and IPC

**B. FIELDS SEARCHED**

Minimum documentation searched (classification system followed by classification symbols)

B23K9

Documentation searched other than minimum documentation to the extent that such documents are included in the fields searched

Electronic data base consulted during the international search (name of data base and, where practicable, search terms used)

CNPAT, CNKI, EPODOC, WPI: 管, 接头, 相贯, 测量, 监测, 检测, 传感, CCD, 同轴, 同心, 坡口, 焊, 机器人, tube?, pipe?, transverse, measur+, sensor, coaxial, groove, weld+, robot

**C. DOCUMENTS CONSIDERED TO BE RELEVANT**

| Category* | Citation of document, with indication, where appropriate, of the relevant passages | Relevant to claim No. |
|---|---|---|
| X | CN 110576240 A (SHANGHAI ELECTRIC NUCLEAR POWER EQUIPMENT CO., LTD.) 17 December 2019 (2019-12-17) description, paragraphs 4-49, and figures 1, 2, and 2a | 1-24 |
| Y | CN 110576240 A (SHANGHAI ELECTRIC NUCLEAR POWER EQUIPMENT CO., LTD.) 17 December 2019 (2019-12-17) description, paragraphs 4-49, and figures 1, 2, and 2a | 25-38, |
| Y | CN 106735999 A (DONGFANG ELECTRIC CORPORATION) 31 May 2017 (2017-05-31) description, paragraphs 5-33, and figures 1-12 | 25-38, |
| A | CN 106624262 A (SHANDONG UNIVERSITY) 10 May 2017 (2017-05-10) entire document | 1-38 |
| A | CN 102581444 A (TIANJIN UNIVERSITY) 18 July 2012 (2012-07-18) entire document | 1-38 |
| A | CN 107480430 A (SHANDONG UNIVERSITY) 15 December 2017 (2017-12-15) entire document | 1-38 |
| A | JP H1094874 A (BABCOCK HITACHI K. K.) 14 April 1998 (1998-04-14) entire document | 1-38 |

☑ Further documents are listed in the continuation of Box C.　　☑ See patent family annex.

| | |
|---|---|
| \* Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **16 September 2022** | **08 October 2022** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2022/076911** |

**C.    DOCUMENTS CONSIDERED TO BE RELEVANT**

| Category* | Citation of document, with indication, where appropriate, of the relevant passages | Relevant to claim No. |
|---|---|---|
| A | JP H1058139 A (MITSUBISHI HEAVY INDUSTRIES, LTD.) 03 March 1998 (1998-03-03) entire document | 1-38 |

Form PCT/ISA/210 (second sheet) (January 2015)

## INTERNATIONAL SEARCH REPORT
### Information on patent family members

International application No.

**PCT/CN2022/076911**

| Patent document cited in search report | | | Publication date (day/month/year) | Patent family member(s) | Publication date (day/month/year) |
|---|---|---|---|---|---|
| CN | 110576240 | A | 17 December 2019 | None | |
| CN | 106735999 | A | 31 May 2017 | None | |
| CN | 106624262 | A | 10 May 2017 | None | |
| CN | 102581444 | A | 18 July 2012 | None | |
| CN | 107480430 | A | 15 December 2017 | None | |
| JP | H1094874 | A | 14 April 1998 | None | |
| JP | H1058139 | A | 03 March 1998 | None | |

Form PCT/ISA/210 (patent family annex) (January 2015)